# EUROPÄISCHE PATENTSCHRIFT

(11) **EP 4 601 411 B1**
(45) Veröffentlichungstag und Bekanntmachung des Hinweises auf die Patenterteilung: **21.10.2026**
(21) Anmeldenummer: 25156727.7
(22) Anmeldetag: 10.02.2025
(51) Int. Cl.: H05B 6/06, H02H 9/00, H05B 6/04

(54) **HAUSHALTSGERÄTEVORRICHTUNG, HAUSHALTSGERÄT UND VERFAHREN ZU EINEM BETRIEB EINER HAUSHALTSGERÄTEVORRICHTUNG**
DOMESTIC APPLIANCE DEVICE, DOMESTIC APPLIANCE AND METHOD FOR OPERATING A DOMESTIC APPLIANCE DEVICE
DISPOSITIF D'APPAREIL MÉNAGER, APPAREIL MÉNAGER ET PROCÉDÉ DE FONCTIONNEMENT D'UN DISPOSITIF D'APPAREIL MÉNAGER

(30) Priorität: 12.02.2024 EP 24382137
(43) Veröffentlichungstag der Anmeldung: 13.08.2025
(73) Patentinhaber: BSH Hausgeräte GmbH, 81739 München (DE)
(72) Erfinder: Acevedo Simon, Arturo, 50009 Zaragoza (ES); Blasco Rueda, Nicolas, 50007 Zaragoza (ES); Puyal Puente, Diego, 50014 Zaragoza (ES)

(56) Entgegenhaltungen:
- JP-A- 2005 322 560
- US-A- 4 638 135
- US-A1- 2020 281 411

## Beschreibung

Die Erfindung betrifft eine Haushaltsgerätevorrichtung nach dem Anspruch 1, ein Haushaltsgerät nach Anspruch 10 und ein Verfahren zu einem Betrieb einer Haushaltsgerätevorrichtung nach Anspruch 11.

Aus dem Stand der Technik sind bereits Haushaltsgeräte, insbesondere Induktionskochfelder, mit einer EMV-Filtereinheit mit zumindest einem Filterkondensator, mit einem Hauptversorgungsschalter zu einer Kontrolle über eine Übertragung eines Netzstroms und einer Netzspannung und mit einem Buskondensator zu einer Glättung eines aus dem Netzstrom erzeugten Gleichstroms bekannt. Weiterhin sind aus CN 107171338 A, CN 104362646 A, CN 203859527 U und CN 102299519 A Einheiten zu einer Begrenzung eines Einschaltstroms an einem Hauptschalter bekannt, welche insbesondere eine Diode und ein Schaltelement aufweisen können. Ferner ist aus WO 2022096122 A1 eine Entladungsschaltung zu einem Entladen eines Kondensators bekannt. JP 2005 322560 A, US 2020/281411 A1 und US 4 638 135 A offenbaren auch Haushaltsgerätevorrichtung laut der Stand der Technik.

Die Aufgabe der Erfindung besteht insbesondere, aber nicht beschränkt darauf, darin, eine gattungsgemäße Vorrichtung mit verbesserten Eigenschaften hinsichtlich einer Effizienz und einer Sicherheit bereitzustellen. Die Aufgabe wird erfindungsgemäß durch die Merkmale des Anspruchs 1, des Anspruchs 10 und des Anspruchs 11 gelöst, während vorteilhafte Ausgestaltungen und Weiterbildungen der Erfindung den Unteransprüchen entnommen werden können.

Es wird eine Haushaltsgerätevorrichtung, insbesondere eine Induktionskochfeldvorrichtung, vorgeschlagen, mit einem Hauptversorgungsschalter, mit zumindest einer Filtereinheit, welche zumindest einen Filterkondensator aufweist, mit zumindest einem Buskondensator, mit einer Steuereinheit, mit zumindest einer Stromversorgungseinheit zumindest zu einer Versorgung der Steuereinheit, mit einer zu dem Hauptversorgungsschalter parallel geschalteten Einschaltstrombegrenzungseinheit zu einer Begrenzung eines Einschaltstroms zumindest an dem Buskondensator und/oder an dem Filterkondensator, und mit einer weiteren Filtereinheit, welche dazu vorgesehen ist, zumindest einen Teil eines Hauptversorgungssignals, insbesondere eines Hauptstroms und/oder einer Hauptspannung, zu einer Versorgung der Einschaltstrombegrenzungseinheit und der Stromversorgungseinheit zu filtern.

Durch eine derartige Ausgestaltung können eine Sicherheit, eine Energieeffizienz, eine Kosteneffizienz und eine Platzeffizienz gesteigert werden. Insbesondere kann ein Einschaltstrom vorteilhaft begrenzt werden, wodurch insbesondere eine Lebensdauer des Hauptversorgungsschalters und zumindest der Filtereinheit, insbesondere des zumindest einen Filterkondensators, und/oder des Buskondensators, insbesondere zumindest eines Teils einer Schaltung der Haushaltsgerätevorrichtung, gesteigert werden kann. Vorteilhaft kann ein durch einen hohen Einschaltstrom bedingtes Steckenbleiben, beispielsweise durch eine Schweißverbindung aufgrund einer hohen Temperatur bei einem erzeugten Lichtbogen, des Hauptversorgungsschalters und somit insbesondere ein Ausfall des Haushaltsgeräts für einen unschließbaren Hauptversorgungsschalter oder ein Verlust einer Sicherheitsfunktion eines unöffenbaren Hauptversorgungsschalters vermieden werden. Weiterhin kann eine Anforderung an den Hauptversorgungsschalter bezüglich einem Standhalten gegenüber dem Einschaltstrom vorteilhaft reduziert oder eliminiert werden, wobei der Hauptversorgungsschalter insbesondere für eine gesteigerte Stromübertragung, insbesondere eines Nennstroms, eingerichtet werden kann.

Insbesondere kann ein Trade-Off zwischen einer Robustness des Hauptversorgungsschalters gegenüber dem Einschaltstrom und Stromübertragungsfähigkeiten des Hauptversorgungsschalters, welche insbesondere abhängig sind von einer Metalllegierung der Kontakte des Hauptversorgungsschalters, für einen besonders hohen Stromübertrag, insbesondere des Nennstroms, optimiert werden.

Vorteilhaft kann in zumindest einem Hauptbetriebszustand der Haushaltsgerätevorrichtung eine besonders effiziente Stromübertragung über den Hauptversorgungsschalter erreicht werden. Vorteilhaft kann durch die weitere Filtereinheit eine Filterung zumindest des Teils des Hauptversorgungssignals, insbesondere eines Hauptstroms und/oder einer Hauptspannung, ausgehend von einer Hauptversorgungseinheit zu einer Versorgung der Stromversorgungseinheit zumindest gefiltert werden. Insbesondere können eine Sicherheit eines Betriebs und insbesondere eine Lebensdauer der Stromversorgungseinheit gesteigert werden. Vorteilhaft kann eine Energieeffizienz gesteigert werden, indem eine Funktionseinheit der Haushaltsgerätevorrichtung und die Stromversorgungseinheit über eine selbe Hauptversorgungseinheit versorgt werden können. Insbesondere können eine Platzeffizienz und/oder eine Kosteneffizienz gesteigert werden, indem die Stromversorgungseinheit und die Einschaltstrombegrenzungseinheit durch eine selbe Filtereinheit mit einer gefilterten Energieversorgung versorgt werden können und insbesondere eine Anzahl an Bauteilen der Haushaltsgerätevorrichtung reduziert werden kann. Insbesondere können eine Sicherheit und eine Zuverlässigkeit durch die Filterung zumindest des Teils des Hauptversorgungssignals zur Versorgung der Stromversorgungseinheit und die Einschaltstrombegrenzungseinheit gesteigert werden. Vorteilhaft ist die weitere Filtereinheit dazu vorgesehen, einen Einschaltstrom und/oder Überspannungsspitzen, zumindest an der Einschaltstrombegrenzungseinheit und/oder der Stromversorgungseinheit, zu begrenzen.

Unter einer "Haushaltsgerätevorrichtung" soll insbesondere zumindest ein Teil, vorzugsweise eine Unterbaugruppe, eines Haushaltsgeräts verstanden werden. Bevorzugt weist die Haushaltegerätevorrichtung zumindest einen Teil einer elektrischen und/oder elektronischen Schaltung und vorzugsweise die gesamte elektrische und/oder elektronische Schaltung des Haushaltsgeräts auf. Die Haushaltsgerätevorrichtung, insbesondere die Schaltung, ist vorzugsweise auf zumindest einer, beispielsweise auf genau einer, Leiterplatte angeordnet. Die Haushaltsgerätevorrichtung kann auch das gesamte Haushaltsgerät umfassen. Die Haushaltsgerätevorrichtung ist vorzugsweise als eine Induktionskochfeldvorrichtung ausgebildet, welche insbesondere zumindest als Teil, insbesondere als eine Unterbaugruppe, eines als Induktionskochfeld ausgebildeten Haushaltsgeräts ausgebildet ist. Alternativ kann die Haushaltsgerätevorrichtung als Teil, insbesondere als eine Unterbaugruppe, eines jeglichen dem Fachmann als sinnvoll erscheinenden Haushaltsgeräts ausgebildet sein, welches zumindest den Hauptversorgungsschalter, insbesondere zu einem Anschluss an einen Netzstrom, die Filtereinheit, insbesondere zu einem Filtern des Netzstroms zu einer Versorgung zumindest einer Funktionseinheit der Haushaltsgerätevorrichtung und den Buskondensator zu einer Versorgung der Funktionseinheit aufweist. Beispielsweise ist denkbar, dass das Haushaltsgerät als ein jegliches, dem Fachmann als sinnvoll erscheinendes Gargerät, insbesondere eine Mikrowelle oder ein Backofen und/oder ein Kochfeld, beispielhaft als ein Widerstandskochfeld, und/oder ein Grillgerät und/oder ein Dampfgargerät, oder als ein Haushaltskühlgerät, beispielhaft ein Kühl- und/oder Gefrierschrank oder eine Klimaanlage, oder als ein Haushaltsreinigungsgerät, wie beispielsweise eine Waschmaschine und/oder ein Trockner oder eine Spülmaschine, oder als dergleichen ausgebildet ist. Es ist denkbar, dass die Haushaltsgerätevorrichtung Teil eines Dunstabzugsgeräts, beispielsweise einer Dunstabzugshaube oder eines Dunstabzugskochfelds, ist.

Das Hauptversorgungssignal ist insbesondere als ein elektrisches Signal, insbesondere als ein periodisches Signal, ausgebildet. Das Hauptversorgungssignal weist insbesondere die Hauptspannung und den Hauptstrom auf und entspricht diesen insbesondere. Die Hauptversorgungseinheit ist vorzugsweise Teil der Haushaltsgerätevorrichtung. Vorzugsweise stellt die Hauptversorgungseinheit das Hauptversorgungssignal, nämlich die Hauptspannung und insbesondere den Hauptstrom, bereit. Das Hauptversorgungssignal ist vorzugsweise als ein Netzversorgungssignal ausgebildet. Der Hauptstrom ist vorzugsweise als ein Wechselstrom, insbesondere als ein Netzstrom, ausgebildet und die Hauptversorgungseinheit ist insbesondere als ein Netzanschluss zu einem Stromübertragungsnetz ausgebildet. Die Hauptspannung kann einphasig, zweiphasig oder dreiphasig ausgebildet sein. Die Hauptspannung ist vorzugsweise als eine Wechselspannung, insbesondere als eine Netzspannung, ausgebildet. Alternativ kann die Hauptversorgungseinheit als zumindest ein Generator oder dergleichen ausgebildet sein. Vorzugsweise sind die Haushaltsgerätevorrichtung und insbesondere das Haushaltsgerät zumindest teilweise, bevorzugt vollständig, mittels des Hauptversorgungssignals, insbesondere mittels des Hauptstroms und/oder der Hauptspannung, betreibbar. Der Hauptversorgungsschalter ist vorzugsweise als ein elektromechanisches Relais ausgebildet. Vorteilhaft können/kann eine Belastbarkeit und/oder eine Zuverlässigkeit und/oder eine Kosteneffizienz des Hauptversorgungsschalters vorteilhaft gesteigert werden. Insbesondere kann eine Komplexität des Hauptversorgungsschalters reduziert werden. Alternativ wäre eine andere, dem Fachmann als sinnvoll erscheinende Ausgestaltung des Hauptversorgungsschalters denkbar, beispielsweise als ein Halbleiterschalter. Der Hauptversorgungsschalter ist in einem geschlossenen Zustand vorzugsweise zu einer Übertragung zumindest eines Teils des Hauptversorgungssignals, insbesondere eines zu dem durch die weitere Filtereinheit gefilterten Teil des Hauptversorgungssignals unterschiedlichen Teils des Hauptversorgungssignals, ausgehend von der Hauptversorgungseinheit vorgesehen. Der Hauptversorgungsschalter ist vorzugsweise zumindest in dem Hauptbetriebszustand der Haushaltsgerätevorrichtung und insbesondere des Haushaltsgeräts in dem geschlossenen Zustand. Vorzugsweise ist der Hauptversorgungsschalter in einem offenen Zustand zu einem Aussetzen der Übertragung, insbesondere eines jeglichen Teils, des Hauptversorgungssignals, insbesondere des Hauptstroms und/oder der Hauptspannung, vorgesehen. Der Hauptversorgungsschalter ist vorzugsweise zumindest in einem Stand-By Modus der Haushaltsgerätevorrichtung und insbesondere des Haushaltsgeräts in dem offenen Zustand, wodurch insbesondere eine Sicherheit und/oder eine Energieeffizienz gesteigert werden können/kann. Vorzugsweise ist ein Öffnungszustand des Hauptversorgungsschalters mittels einer Bedienerschnittstelle, insbesondere des Haushaltsgeräts und/oder der Haushaltsgerätevorrichtung, durch einen Bediener ansteuerbar. Das Haushaltsgerät, vorzugsweise die Haushaltsgerätevorrichtung, weist insbesondere zumindest eine, insbesondere die oben genannte, mittels dem von dem Hauptversorgungsschalter übertragenen Teil des Hauptversorgungssignals, insbesondere mittels des Teils des Hauptstroms und/oder der Hauptspannung, zu einem Betrieb versorgbare Funktionseinheit auf, welche insbesondere bei dem Betrieb zu einer Bereitstellung einer Funktion des Haushaltsgeräts vorgesehen ist. Die Funktionseinheit ist vorzugsweise als eine Induktionseinheit des Induktionskochfelds, insbesondere der Induktionskochfeldvorrichtung, ausgebildet. Die Induktionseinheit weist vorzugsweise zumindest eine Induktionsspule auf und ist insbesondere zu einer Emission einer induktiven Energie, insbesondere zu einer induktiven Beheizung und/oder einer induktiven Energieversorgung, vorgesehen. Alternativ kann die Funktionseinheit beispielsweise als ein Elektromotor, beispielhaft eines als Waschmaschine ausgebildeten Haushaltsgeräts oder zu einem Antrieb eines Kompressors des Haushaltskühlgeräts, oder zu einem Antrieb eines Motors eines Dunstabzugs, oder dergleichen, ausgebildet sein. Vorzugsweise ist die Funktionseinheit lediglich in dem geschlossenen Zustand des Hauptversorgungsschalters, insbesondere zur Bereitstellung der vorgesehenen Funktion, insbesondere basierend auf dem Hauptversorgungssignals, nämlich basierend auf dem Hauptstrom und/oder der Hauptspannung, betreibbar. Die Funktionseinheit ist vorzugsweise mittels eines Versorgungssignals betreibbar, welches insbesondere mittels des Hauptversorgungssignals erzeugbar ist, wobei die Funktionseinheit, insbesondere die zumindest eine Induktionsspule, vorzugsweise dazu vorgesehen ist, zu der Bereitstellung der Funktion von dem Versorgungsignal durchflossen zu werden. Bevorzugt ist die Funktionseinheit mittels eines Versorgungsstroms und/oder einer Versorgungsspannung betreibbar, welche/r insbesondere mittels des Hauptstroms und/oder der Hauptspannung erzeugbar sind/ist, wobei die Funktionseinheit, insbesondere die zumindest eine Induktionsspule, vorzugsweise dazu vorgesehen ist, zu der Bereitstellung der Funktion von dem Versorgungsstrom durchflossen zu werden. Der Versorgungsstrom ist vorzugsweise als ein zumindest gefilterter und insbesondere gleichgerichteter und/oder mittels des Buskondensators geglätteter und/oder wechselgerichteter Teil des Hauptstroms ausgebildet, wobei insbesondere Entsprechendes für die Versorgungsspannung bezüglich der Hauptspannung gültig ist. Der Buskondensator ist vorzugsweise als ein Glättungskondensator ausgebildet. Der Buskondensator ist der Einschaltstrombegrenzungseinheit, insbesondere zumindest entlang einer Referenzstromrichtung, vorzugsweise nachgeschaltet oder vorgeschaltet. Die Referenzstromrichtung korreliert vorzugsweise zu einer positiven oder alternativ einer negativen Polarität, der Hauptspannung und ist insbesondere als eine Stromrichtung des Hauptstroms ausgebildet. Die Haushaltsgerätevorrichtung weist vorzugsweise einen Gleichrichter auf. Der Buskondensator ist vorzugsweise zumindest der Filtereinheit und insbesondere zumindest dem Gleichrichter, insbesondere zumindest entlang der Referenzstromrichtung, nachgeschaltet. Der Buskondensator ist dem Gleichrichter vorzugsweise unmittelbar nachgeschaltet, insbesondere zumindest entlang der Referenzstromrichtung. Vorzugsweise ist der Gleichrichter dazu vorgesehen, eine/n, insbesondere aus dem Hauptstrom und/oder der Hauptspannung generierten, Gleichstrom und/oder Gleichspannung zu erzeugen und insbesondere an den Buskondensator anzulegen. Der Gleichrichter ist vorzugsweise als ein Brückengleichrichter ausgebildet, alternativ ist jedoch eine jegliche weitere, dem Fachmann als sinnvoll erscheinende Ausgestaltung des Gleichrichters denkbar. Der Buskondensator und insbesondere der Gleichrichter sind vorzugsweise zumindest in dem geschlossenen Zustand des Hauptversorgungsschalters, vorzugsweise dem Hauptversorgungsschalter, insbesondere zumindest entlang der Referenzstromrichtung, nachgeschaltet. Vorzugsweise weist die Haushaltsgerätevorrichtung zumindest einen, insbesondere dem Gleichrichter und vorzugsweise dem Buskondensator, insbesondere zumindest entlang der Referenzstromrichtung, nachgeschalteten Wechselrichter auf, welcher insbesondere den Versorgungsstrom und/oder die Versorgungspannung bereitstellt. Der Wechselrichter ist vorzugsweise Teil einer Leistungseinheit der Haushaltsgerätevorrichtung, welche zu einer Erzeugung des Versorgungsignals basierend auf dem, insbesondere gefilterten und/oder gleichgerichteten und/oder geglätteten, Hauptversorgungssignal, vorgesehen ist. Die Leistungseinheit weist vorzugsweise zumindest einen Resonanzkondensator auf. Die Leistungseinheit ist vorzugsweise dazu vorgesehen, eine Funktionsleistung, insbesondere eine Heizleistung, an der Funktionseinheit, insbesondere an der Induktionseinheit, zu deren Betrieb bereitzustellen. Der Gleichrichter ist vorzugsweise der Filtereinheit, insbesondere zumindest entlang der Referenzstromrichtung, nachgeschaltet, wobei vorteilhaft eine Wechselspannung, insbesondere die Hauptspannung, an der Filtereinheit anlegbar ist. Vorzugsweise ist die Einschaltstrombegrenzungseinheit zu einer Begrenzung eines AC-Einschaltstroms, insbesondere zumindest an der Filtereinheit, und/oder zu einer Begrenzung eines DC-Einschaltstroms, insbesondere zumindest an dem Buskondensator, vorgesehen. Der Hauptversorgungsschalter ist dem Gleichrichter und/oder dem Buskondensator und/oder der Leistungseinheit und/oder der Funktionseinheit, insbesondere zumindest entlang der Referenzstromrichtung, vorzugsweise vorgeschaltet und insbesondere diesen und der Hauptversorgungseinheit zwischengeschaltet. Der Hauptversorgungsschalter ist insbesondere dazu vorgesehen, den Gleichrichter und/oder den Buskondensator und/oder die Leistungseinheit und/oder die Funktionseinheit, insbesondere in dem Stand-By Modus, von der Hauptversorgungseinheit zu trennen und insbesondere dazu vorgesehen, eine Energieversorgung dieser zu kontrollieren, insbesondere auszusetzen oder zu etablieren.

Die Filtereinheit ist vorzugsweise als eine, insbesondere dem Fachmann bekannte, EMV-Filtereinheit ausgebildet. Die Filtereinheit weist vorzugsweise mehr als einen Filterkondensator, beispielsweise genau zwei Filterkondensatoren auf, wobei die Einschaltstrombegrenzungseinheit vorzugsweise zur Begrenzung des Einschaltstroms an jedem Filterkondensator vorgesehen ist. Der zumindest eine Filterkondensator ist vorzugsweise als ein Entstörkondensator, insbesondere der Klasse X, beispielhaft der Unterklasse X2 oder dergleichen, ausgebildet, und ist insbesondere zumindest dazu vorgesehen, Überspannungsspitzen aufgrund von Blitzeinschlägen und/oder Netzstörungen und/oder dergleichen zu filtern. Vorzugsweise weist die Filtereinheit zumindest eine, insbesondere als Drosselspule ausgebildete, Drossel, und beispielsweise genau vier Drosseln auf. Die Filtereinheit weist schaltungstechnisch vorzugsweise abwechselnd jeweils den Filterkondensator und die Drossel auf. Alternativ ist eine andere, dem Fachmann als sinnvoll erscheinende Ausgestaltung des Filterkondensators denkbar. Die Filtereinheit ist insbesondere dazu vorgesehen, zumindest den durch den Hauptversorgungsschalter übertragenen Teil des Hauptversorgungssignals zu filtern, insbesondere für eine Bereitstellung eines auf dem Hauptversorgungssignal basierenden zumindest gefilterten Signals zumindest an dem Gleichrichter und/oder an dem Buskondensator und/oder der Leistungseinheit und/oder der Funktionseinheit.

Die Einschaltstrombegrenzungseinheit ist vorzugsweise zu einer Begrenzung des Einschaltstroms an jedem der Einschaltstrombegrenzungseinheit, insbesondere zumindest entlang der Referenzstromrichtung, nachgeschalteten elektrischen und/oder elektronischen Bauteils, vorgesehen. Die Einschaltstrombegrenzungseinheit ist insbesondere zu einer Begrenzung des Einschaltstroms an dem Hauptversorgungsschalter vorgesehen. Insbesondere ist die Einschaltstrombegrenzungseinheit zur Begrenzung des Einschaltstroms zumindest bei einem Schließen des Hauptversorgungsschalters vorgesehen. Der Hauptstrom ist insbesondere als der Einschaltstrom bei dem Schließen des Hauptversorgungsschalters ausgebildet, wobei der Einschaltstrom insbesondere in zumindest einer nichterfindungsgemäßen Ausgestaltung frei eines Einflusses der Einschaltstrombegrenzungseinheit eine gegenüber einem als Nennstrom ausgebildeten Hauptstroms gesteigerte Stromstärke aufweisen kann. Die Einschaltstrombegrenzungseinheit kann zu einer Eliminierung des Einschaltstroms, insbesondere an dem Hauptversorgungsschalter und/oder an dem Filterkondensator und/oder an dem Buskondensator, vorgesehen sein. Die Einschaltstrombegrenzungseinheit ist insbesondere unabhängig von einer Schaltstellung des Hauptversorgungsschalters mit der Hauptversorgungseinheit, insbesondere elektrisch leitend, verbunden und/oder verbindbar. Die Einschaltstrombegrenzungseinheit weist vorzugsweise zumindest ein Zusatzschaltelement auf. Vorzugsweise weist die Einschaltstrombegrenzungseinheit einen das zumindest eine Zusatzschaltelement aufweisenden Zusatzschalter auf, welcher insbesondere als ein unidirektionaler Zusatzschalter ausgebildet ist. Vorzugsweise ist der unidirektionale Zusatzschalter ein stromunidirektionaler Schalter, welcher insbesondere dazu vorgesehen ist, Strom, insbesondere in einem geschlossenen, leitenden Zustand des Zusatzschaltelements, in nur eine Richtung zu leiten. Der Zusatzschalter ist vorzugsweise ein spannungsbidirektionaler Schalter, welcher insbesondere dazu vorgesehen ist, eine Spannung mit beliebiger Polarität, insbesondere in einem geöffneten, nichtleitenden Zustand, des Zusatzschaltelements, zu blockieren. Der unidirektionale Zusatzschalter ist vorzugsweise ein bezüglich eines unidirektionalen Stroms und einer bipolaren Spannung steuerbarer Schalter. Der Zusatzschalter kann als ein SMD(surface mount device)-Komponent ausgebildet sein. Der unidirektionale Zusatzschalter weist vorzugsweise, insbesondere neben dem Zusatzschaltelement, zumindest ein, vorteilhaft genau ein, unidirektionales elektrisches Element, insbesondere eine Diode, auf. Vorzugsweise weist der unidirektionale Zusatzschalter genau ein Zusatzschaltelement auf. Alternativ wäre denkbar, dass der Zusatzschalter mehr als ein Zusatzschaltelement und/oder mehr als ein unidirektionales elektrisches Element aufweist. Die Einschaltstrombegrenzungseinheit weist vorzugsweise lediglich den Zusatzschalter, insbesondere den genau einen Zusatzschalter, auf, wodurch insbesondere eine Komplexität der Einschaltstrombegrenzungseinheit vorteilhaft reduziert werden kann.

Die Steuereinheit ist vorzugsweise zumindest zu einer Steuerung der Einschaltstrombegrenzungseinheit, insbesondere des Zusatzschaltelements, vorgesehen. Vorzugsweise ist die Steuereinheit zur Steuerung des zumindest einen Wechselrichters, insbesondere zumindest eines Schaltelements des Wechselrichters, vorgesehen. Die Steuereinheit ist vorzugsweise dazu vorgesehen, den Hauptversorgungsschalter zu steuern. Vorzugsweise ist die Steuereinheit zu der Steuerung in Abhängigkeit von einer Einstellung des Bedieners an der Bedienerschnittstelle vorgesehen. Die Bedienerschnittstelle und die Steuereinheit sind vorzugsweise zumindest elektrisch und/oder elektronisch miteinander verbunden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Stromversorgungseinheit ist vorzugsweise dazu vorgesehen, zumindest den durch die weitere Filtereinheit gefilterten Teil des Hauptversorgungssignals zur Versorgung der Steuereinheit umzuwandeln. Vorzugsweise ist die Stromversorgungseinheit zur Versorgung der Steuereinheit dazu vorgesehen, einen Gleichstrom zu generieren. Die Stromversorgungseinheit ist vorzugsweise dazu vorgesehen, zumindest den Teil des Hauptversorgungssignals in ein Stromversorgungssignal, insbesondere in ein Gleichstromsignal, zur Versorgung der Steuereinheit umzuwandeln. Vorzugsweise ist die Stromversorgungseinheit dazu vorgesehen, den Hauptstrom in einen Gleichstrom umzuwandeln. Die weitere Filtereinheit ist vorzugsweise als eine PSU-Filtereinheit ausgebildet. Die Steuereinheit ist insbesondere Teil einer Elektronikplatinenschaltung. Vorzugsweise ist die Stromversorgungseinheit dazu vorgesehen, den Teil des Hauptversorgungssignals in das Stromversorgungssignal zur Versorgung der Elektronikplatinenschaltung umzuwandeln. Die weitere Filtereinheit ist vorzugsweise zu einem Filtern des Teils des Hauptversorgungssignals, insbesondere des Teils der Hauptspannung und/oder des Hauptstroms, zu der Versorgung der Elektronikplatinenschaltung vorgesehen. Die Elektronikplatinenschaltung ist der weiteren Filtereinheit, insbesondere zumindest entlang der Referenzstromrichtung, vorzugsweise stets, nachgeschaltet. Die Stromversorgungseinheit ist der weiteren Filtereinheit und der Elektronikplatinenschaltung insbesondere zwischengeschaltet. Unter einer Versorgung soll eine elektrische Versorgung eines elektrischen Bauteils und/oder einer elektrischen Einheit, insbesondere mit einem Strom und/oder einer Spannung, insbesondere zu einem Betrieb des Bauteils und/oder der Einheit, verstanden werden. Die Stromversorgungseinheit und insbesondere die Steuereinheit, sind der weiteren Filtereinheit, insbesondere zumindest entlang der Referenzstromrichtung, vorzugsweise stets nachgeschaltet. Die weitere Filtereinheit ist vorzugsweise seriell zu der Stromversorgungseinheit und insbesondere der Steuereinheit verschaltet. Die Stromversorgungseinheit ist der weiteren Filtereinheit und der Steuereinheit insbesondere zwischengeschaltet. Vorzugsweise sind die Stromversorgungseinheit und somit insbesondere die Steuereinheit parallel zu der Einschaltstrombegrenzungseinheit verschaltet. Die Bedienerschnittstelle ist vorzugsweise parallel zu der Einschaltstrombegrenzungseinheit verschaltet. Die weitere Filtereinheit kann zu einem Filtern des Teils des Hauptversorgungssignals, insbesondere der Hauptspannung und/oder des Hauptstroms, zu einer Versorgung der Bedienerschnittstelle vorgesehen sein. Alternativ kann die weitere Filtereinheit ein gefiltertes Signal lediglich zu der Versorgung der Einschaltstrombegrenzungseinheit und der Stromversorgungseinheit vorgesehen sein. Die Stromversorgungseinheit kann dazu vorgesehen sein, auch die Bedienerschnittstelle zu versorgen oder lediglich dazu vorgesehen sein, die Steuereinheit zu versorgen. Die Bedienerschnittstelle ist vorzugsweise unabhängig von einer Schaltstellung des Hauptversorgungsschalters mit der Hauptversorgungseinheit, insbesondere elektrisch leitend, verbunden. Die Bedienerschnittstelle ist insbesondere permanent, insbesondere elektrisch leitend, mit der Hauptversorgungseinheit verbunden. Die Einschaltstrombegrenzungseinheit ist der weiteren Filtereinheit, insbesondere zumindest entlang der Referenzstromrichtung, vorzugsweise stets, nachgeschaltet. Die weitere Filtereinheit kann zumindest eine, beispielhaft genau eine und/oder lediglich eine, Filterspule aufweisen. Alternativ oder zusätzlich kann die weitere Filtereinheit weitere Klemm- und/oder Ableitkomponenten und/oder Begrenzungskomponenten und/oder Schutzkomponenten und/oder dergleichen aufweisen. Beispielsweise kann die weitere Filtereinheit zumindest einen Varistor und/oder zumindest einen Widerstand und/oder zumindest einen Kondensator und/oder zumindest eine nichtlineare Spule und/oder zumindest einen Überspannungsableiter, die insbesondere in Reihen- oder Parallelschaltungen innerhalb der weiteren Filtereinheit verbunden werden können, und/oder jegliches andere, dem Fachmann als sinnvoll erscheinende Filterelement, aufweisen. Die weitere Filtereinheit ist vorzugsweise seriell zu der Einschaltstrombegrenzungseinheit verschaltet. Die weitere Filtereinheit ist insbesondere dazu vorgesehen, Störungen und/oder Überspannungsspitzen und/oder Einschaltströme und/oder dergleichen aus dem Hauptversorgungssignal zu filtern. Die weitere Filtereinheit ist insbesondere dazu vorgesehen, der Stromversorgungseinheit und der Einschaltstrombegrenzungseinheit eine Energieversorgung und insbesondere einen Schutz, insbesondere vor Abnormalitäten des Hauptversorgungssignals, bereitzustellen.

Unter "vorgesehen" soll speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Weiterhin wird vorgeschlagen, dass der Hauptversorgungsschalter einer, insbesondere der oben genannten, Hauptversorgungseinheit und der Filtereinheit zwischengeschaltet ist. Vorteilhaft ist die Filtereinheit für den geöffneten Hauptversorgungsschalter und insbesondere das geöffnete Zusatzschaltelement elektrisch von der Hauptversorgungseinheit, bevorzugt zumindest in dem Stand-By Modus der Haushaltsgerätevorrichtung, insbesondere des Haushaltsgeräts, trennbar. In einer derartigen Ausgestaltung ist der Einschaltstrom insbesondere an dem Buskondensator und zudem an der Filtereinheit mittels der Einschaltstrombegrenzungseinheit begrenzbar. Insbesondere kann eine Zeitdauer einer Belastung der Filtereinheit, insbesondere des zumindest einen Filterkondensators, mit dem Teil des Hauptversorgungssignals, insbesondere mit der Hauptspannung und insbesondere dem Hauptstrom reduziert werden, wodurch vorteilhaft eine Degradierung der Filtereinheit, welche beispielhaft durch Nässe und Feuchtigkeit beschleunigt werden kann, reduziert werden kann. Vorteilhaft kann eine Lebensdauer der Filtereinheit, insbesondere des zumindest einen Filterkondensators, gesteigert und/oder Anforderungen an die Filtereinheit, insbesondere bezüglich einer Widerstandsfähigkeit gegenüber der Belastung, reduziert werden. Ferner können/kann eine Energieeffizienz und/oder eine Kosteneffizienz gesteigert werden, insbesondere für ein Entladen des Filterkondensators zu einer Steigerung einer Sicherheit zumindest in dem Stand-By Modus zu einem Vermeiden eines elektrischen Schocks bei Berührung des Filterkondensators. Vorzugsweise weist die Haushaltsgerätevorrichtung zumindest eine Filterentladungseinheit zum Entladen zumindest des Filterkondensators auf, welche beispielsweise zumindest ein Widerstandselement zu einem resistiven Entladen aufweisen und/oder als dieses ausgebildet sein kann. Der Hauptversorgungsschalter ist der Hauptversorgungseinheit, insbesondere zumindest entlang der Referenzstromrichtung, vorzugsweise unmittelbar nachgeschaltet. Der Hauptversorgungsschalter ist vorzugsweise der Hauptversorgungseinheit und einem Rest der Haushaltsgerätevorrichtung, insbesondere einem Rest der Schaltung, insbesondere frei der Bedienerschnittstelle und/oder der Steuereinheit, zwischengeschaltet. Die Filtereinheit ist dem Hauptversorgungsschalter und insbesondere der Einschaltstrombegrenzungseinheit zumindest entlang der Referenzstromrichtung vorzugsweise, insbesondere unmittelbar, nachgeschaltet.

Zudem wird vorgeschlagen, dass die weitere Filtereinheit an einem Verbindungspunkt zwischen einer, insbesondere der oben genannten, Hauptversorgungseinheit und dem Hauptversorgungsschalter angeschlossen ist. Insbesondere kann der Hauptversorgungsschalter auf eine besonders sichere und energieeffiziente Weise gesteuert werden. Vorzugsweise ist die weitere Filtereinheit dem Hauptversorgungsschalter parallelgeschaltet. Die weitere Filtereinheit ist vorzugsweise an einer Abzweigung zwischen der Hauptversorgungseinheit und dem Hauptversorgungsschalter ausgehend von dem Verbindungspunkt angeordnet. Die weitere Filtereinheit ist vorzugsweise unabhängig von einer Schaltstellung des Hauptversorgungsschalters mit der Hauptversorgungseinheit verbindbar und/oder verbunden. Die Steuereinheit ist vorzugsweise unabhängig von einer Schaltstellung des Hauptversorgungsschalters über die weitere Filtereinheit mit der Hauptversorgungseinheit verbindbar und/oder verbunden. Die Einschaltstrombegrenzungseinheit ist vorzugsweise unabhängig von einer Schaltstellung des Hauptversorgungsschalters über die weitere Filtereinheit mit der Hauptversorgungseinheit verbindbar und/oder verbunden. Vorteilhaft kann der Hauptversorgungsschalter durch die der weiteren Filtereinheit, insbesondere seriell, nachgeschaltete Steuereinheit gesteuert werden, insbesondere auch zu einem Schließen des Hauptversorgungsschalters ausgehend von einem geöffneten Zustand des Hauptversorgungsschalters, in welchem dieser keine Energieversorgung überträgt. Vorteilhaft kann die weitere Filtereinheit den Teil des Hauptversorgungssignals unabhängig von einer Schaltstellung des Hauptversorgungsschalters filtern und das gefilterte Signal insbesondere an einem Ausgang der weiteren Filtereinheit, insbesondere zu der Versorgung zumindest der Stromversorgungseinheit, insbesondere der Steuereinheit und beispielsweise der Bedienerschnittstelle, und der Einschaltstrombegrenzungseinheit, bereitgestellt werden.

In einer vorteilhaften Ausgestaltung der Erfindung weist die Haushaltsgerätevorrichtung zumindest einen Stand-By Schalter auf, welcher dazu vorgesehen ist, die Stromversorgungseinheit, und somit insbesondere die Steuereinheit, und die Einschaltstrombegrenzungseinheit in einem Stand-By Modus von einer Hauptversorgungseinheit zu trennen. Vorteilhaft kann eine Energieeffizienz der Haushaltsgerätevorrichtung gesteigert werden, insbesondere indem die Einschaltstrombegrenzungseinheit und die Stromversorgungseinheit in dem Stand-By Modus mittels des geöffneten Stand-By Schalters, insbesondere zusätzlich zu der durch den geöffneten Hauptversorgungsschalter elektrisch von der Hauptversorgungseinheit getrennten Filtereinheit und der Leistungseinheit und Funktionseinheit, elektrisch von der Hauptversorgungseinheit trennbar ist. Insbesondere kann ein elektrischer Verbrauch der Haushaltsgerätevorrichtung in dem Stand-By Modus reduziert werden, wodurch insbesondere moderne Standards und Energievorschriften besonders effizient eingehalten und/oder Energieeinsparungen, Kostensenkungen und eine geringere Umweltbelastung erreicht werden können. Ferner kann eine Sicherheit in dem Stand-By Modus gesteigert werden. Der Stand-By Schalter ist insbesondere der weiteren Filtereinheit und der Hauptversorgungseinheit zwischengeschaltet. Die Stand-By Schalter ist der weiteren Filtereinheit vorzugsweise, insbesondere zumindest entlang der Referenzstromrichtung, bevorzugt stets, vorgeschaltet. Vorzugsweise ist der Stand-By Schalter der weiteren Filtereinheit unmittelbar vorgeschaltet. Der Stand-By Schalter ist vorzugsweise seriell mit der weiteren Filtereinheit und insbesondere jeweils seriell mit der Stromversorgungseinheit und der Einschaltstrombegrenzungseinheit verschaltet. Der Stand-By Schalter ist insbesondere der Stromversorgungseinheit und der Einschaltstrombegrenzungseinheit, insbesondere zumindest entlang der Referenzstromrichtung, bevorzugt stets, vorgeschaltet. Die weitere Filtereinheit ist vorzugsweise dem Stand-By Schalter und der Stromversorgungseinheit, sowie dem Stand-By Schalter und der Einschaltstrombegrenzungseinheit zwischengeschaltet. Die Bedienerschnittstelle ist vorzugsweise unabhängig von einem Schaltzustand des Stand-By Schalters, insbesondere elektrisch leitend, mit der Hauptversorgungseinheit verbunden. Vorzugsweise weist die Bedienerschnittstelle zumindest eine Steuereinheit, insbesondere eine Bedienersteuereinheit auf, welche zu einer Steuerung des Stand-By Schalters vorgesehen ist. Vorteilhaft kann der Stand-By Schalter unabhängig von seiner Schaltstellung und der Schaltstellung des Hauptversorgungsschalters, insbesondere auch in einer geöffneten Schaltstellung, gesteuert werden. Der Stand-By Schalter weist vorzugsweise genau ein Schaltelement auf und ist insbesondere als dieses ausgebildet. Der Stand-By Schalter ist vorzugsweise als ein elektromechanisches Relais oder als ein Halbleiterschalter ausgebildet. Alternativ ist eine andere, dem Fachmann als sinnvoll erscheinende Ausbildung des Stand-By Schalters denkbar.

Ferner wird vorgeschlagen, dass der Stand-By Schalter an einem, insbesondere dem oben genannten, Verbindungspunkt zwischen der Hauptversorgungseinheit und dem Hauptversorgungsschalter angeschlossen ist. Vorteilhaft kann der Hauptversorgungsschalter auf eine besonders präzise und sicherere Weise gesteuert werden, wobei insbesondere ein besonders energieeffizienter Stand-By Modus bereitgestellt werden kann. Vorzugsweise ist der Stand-By Schalter dem Hauptversorgungsschalter parallelgeschaltet. Der Stand-By Schalter ist vorzugsweise an der Abzweigung zwischen der Hauptversorgungseinheit und dem Hauptversorgungsschalter ausgehend von dem Verbindungspunkt angeordnet. Der Stand-By Schalter ist vorzugsweise unabhängig von einer Schaltstellung des Hauptversorgungsschalters mit der Hauptversorgungseinheit verbunden. Ein Eingang des Stand-By Schalters ist insbesondere permanent elektrisch leitend mit der Hauptversorgungseinheit verbunden, wobei der Stand-By Schalter insbesondere selbst in einer geöffneten Stellung eine elektrische Trennung der ihm nachgeschalteten Einheiten und Elemente zu der Hauptversorgungseinheit bereitstellt. Die weitere Filtereinheit ist vorzugsweise unabhängig von einer Schaltstellung des Hauptversorgungsschalters über den Stand-By Schalter mit der Hauptversorgungseinheit verbindbar. Der Stand-By Schalter ist vorzugsweise unmittelbar mit der Hauptversorgungseinheit, insbesondere mit zumindest einem an die Hauptversorgungseinheit angeschlossenen Außenleiter, verbunden.

Die Haushaltsgerätevorrichtung weist vorzugsweise zumindest zwei, beispielsweise genau zwei, Elektronikmodule, welche insbesondere jeweils als eine elektronische Platine ausgebildet sind, auf und/oder ist als die zumindest zwei Elektronikmodule ausgebildet. Die Elektronikmodule sind vorzugsweise separat voneinander ausgebildet und zumindest datentechnisch, vorzugsweise elektrisch, miteinander verbunden. Die Haushaltsgerätevorrichtung weist ein Bedienerschnittstellenmodul auf, welches die Bedienerschnittstelle und Bauteile zu einer Versorgung der Bedienerschnittstelle, insbesondere eine zusätzliche weitere Filtereinheit und eine weitere Stromversorgungseinheit, umfasst. Vorzugsweise weist die Haushaltsgerätevorrichtung ein Leistungsmodul, insbesondere ein Leistungsinduktionsmodul, auf, welches insbesondere eine gesamte Schaltung der Haushaltsgerätevorrichtung ausgenommen des Bedienerschnittstellenmoduls, insbesondere die Einschaltstrombegrenzungseinheit, die weitere Filtereinheit, den Stand-By Schalter, den Hauptversorgungsschalter, den Gleichrichter, den Buskondensator, die Leistungseinheit und die Funktionseinheit aufweist. Vorzugsweise ist das Leistungsmodul als eine Leistungsplatine ausgebildet. Das Leistungsmodul ist mittels des Stand-By Schalters und des Hauptversorgungsschalters elektrisch, insbesondere vollständig, von der Hauptversorgungseinheit separierbar. Das Bedienerschnittstellenmodul und das Leistungsmodul sind vorzugsweise jeweils mittels der Hauptversorgungseinheit, insbesondere mittels des Hauptversorgungssignals, betreibbar. Das Bedienerschnittstellenmodul ist vorzugsweise permanent, insbesondere elektrisch leitend, mit der Hauptversorgungseinheit verbunden. Vorteilhaft kann der Stand-By Modus vorteilhaft über das Bedienerschnittstellenmodul, insbesondere über die Bedienerschnittstelle, gesteuert werden. Die Elektronikmodule der Haushaltsgerätevorrichtung, insbesondere zumindest die Bedienerschnittstellenmodul und das Leistungsmodul, sind vorzugsweise über einen internen Kommunikationsbus miteinander verbunden, wobei das Bedienerschnittstellenmodul insbesondere zumindest den Stand-By Modus verwaltet, insbesondere mittels zumindest eines Befehls ausgehend von der Bedienerschnittstelle, welcher beispielsweise zumindest ein elektronisches Signal und/oder zumindest eine Kommunikationsnachricht, vorzugsweise zur Steuerung des Stand-By Schalters, aufweisen kann.

In einer weiteren Ausgestaltung der Erfindung wird vorgeschlagen, dass die weitere Filtereinheit permanent, insbesondere auch in dem Stand-By Modus, elektrisch leitend mit einer Hauptversorgungseinheit verbunden ist. Die Haushaltsgerätevorrichtung kann insbesondere frei des Stand-By Schalters ausgebildet sein. Vorzugsweise ist die weitere Filtereinheit der Hauptversorgungseinheit, insbesondere zumindest entlang der Referenzstromrichtung, vorzugsweise stets, unmittelbar nachgeschaltet und insbesondere untrennbar mit der Hauptversorgungseinheit elektrisch leitend verbunden. Die weitere Filtereinheit ist vorzugsweise dazu vorgesehen, das Hauptversorgungssignal permanent, insbesondere unabhängig von einem Betriebszustand, zu filtern. Vorteilhaft können das Bedienerschnittstellenmodul und das Leistungsmodul zu einem Modul zusammengefasst werden. Das Bedienerschnittstellenmodul und das Leistungsmodul sind vorzugsweise miteinander integriert, insbesondere in einem einzigen gemeinsamen Modul, ausgebildet. Insbesondere können eine Platzeffizienz und eine Kosteneffizienz, insbesondere durch eine reduzierte Anzahl elektrischer und/oder elektronischer Bauteile, gesteigert werden. Vorteilhaft kann die Stromversorgungseinheit die Steuereinheit und die Bedienerschnittstelle versorgen, wobei die Steuereinheit und die Bedienerschnittstelle insbesondere in einer gemeinsamen elektrischen Schaltung und/oder in einem gemeinsamen Modul ausgebildet sein können. Die Stromversorgungseinheit und somit insbesondere die Steuereinheit, und die Einschaltstrombegrenzungseinheit sind vorzugsweise permanent elektrisch leitend mit einer Hauptversorgungseinheit verbunden. Insbesondere kann eine Steuerung der Schaltelemente der Haushaltegerätevorrichtung durch eine permanent elektrisch versorgte Steuereinheit vereinfacht werden.

Weiterhin wird vorgeschlagen, dass die Haushaltsgerätevorrichtung zumindest eine Hauptspannungs-Ermittlungseinheit aufweist. Insbesondere kann zumindest das Zusatzschaltelement in einem Betriebszustand besonders vorteilhaft in Abhängigkeit von der Hauptspannung gesteuert werden, wodurch insbesondere ein Eingangsstrom besonders effizient mittels der Eingangsstrombegrenzungseinheit begrenzt werden kann. Vorteilhaft kann ein besonders präzise gesteuertes und insbesondere effizientes Schaltverhalten der Schaltelemente der Haushaltsgerätevorrichtung erreicht werden, wobei insbesondere Störsignale begrenzt und/oder die Bauelemente der Haushaltsgerätevorrichtung besonders effizient geschützt werden können. Die Hauptspannungs-Ermittlungseinheit ist vorzugsweise dazu vorgesehen, zumindest einen, insbesondere zu dem Messzeitpunkt aktuellen, Parameter der Hauptspannung zu ermitteln. Vorzugsweise ist die Hauptspannungs-Ermittlungseinheit dazu vorgesehen, eine Polarität und/oder eine Frequenz und/oder eine Amplitude und/oder zumindest eine Intensität und/oder einen anderen, dem Fachmann als sinnvoll erscheinenden Parameter der Hauptspannung zu ermitteln. Die Hauptspannungs-Ermittlungseinheit ist vorzugsweise dazu vorgesehen, ein Ermittlungsergebnis basierend auf dem zumindest einen Parameter an die Steuereinheit und/oder an die Bedienersteuereinheit zu übermitteln. Die Steuereinheit ist vorzugsweise zu einer Steuerung zumindest des Hauptversorgungsschalters und/oder der Einschaltstrombegrenzungseinheit und/oder einer unten genannten Busentladungseinheit und/oder des zumindest einen Wechselrichters in Abhängigkeit von dem Ermittlungsergebnis vorgesehen.

Zudem wird vorgeschlagen, dass die Haushaltsgerätevorrichtung eine Vorschalteinheit aufweist, welche die weitere Filtereinheit aufweist, wobei die Hauptspannungs-Ermittlungseinheit der Vorschalteinheit zumindest teilweise, insbesondere stets, nachgeschaltet ist. Vorteilhaft können eine Energieeffizienz, insbesondere in dem Stand-By Modus, und/oder eine Sicherheit, insbesondere durch eine Bereitstellung zumindest des gefilterten Teils des Hauptversorgungssignals, bezüglich eines Betriebs der Hauptspannungs-Ermittlungseinheit gesteigert werden. Die Vorschalteinheit weist insbesondere lediglich die weitere Filtereinheit, insbesondere in einer Ausgestaltung der Erfindung, in welcher die Haushaltsgerätevorrichtung frei des Stand-By Schalters ausgebildet ist, oder die weitere Filtereinheit und den Stand-By Schalter auf. Vorzugsweise ist die Hauptspannungs-Ermittlungseinheit zumindest dem Stand-By Schalter und/oder der weiteren Filtereinheit nachgeschaltet. Vorzugsweise ist die Vorschalteinheit dazu vorgesehen, der Hauptspannungs-Ermittlungseinheit die Hauptspannung unabhängig von einer Schaltstellung des Hauptversorgungsschalters bereitzustellen. Die Hauptspannungs-Ermittlungseinheit ist vorzugsweise dazu vorgesehen, den zumindest einen Parameter unabhängig von der Schaltstellung des Hauptversorgungsschalters zu ermitteln. Die Hauptspannungs-Ermittlungseinheit kann der weiteren Filtereinheit, insbesondere unmittelbar, vorgeschaltet und insbesondere der weiteren Filtereinheit und dem Stand-By Schalter zwischengeschaltet sein. Vorteilhaft kann eine Ermittlung eines durch die weitere Filtereinheit, insbesondere durch Filterverzerrungen und/oder Filterartefakte, möglicherweise verfälschten Parameters der Hauptspannung auf besonders einfache Weise vermieden werden. Insbesondere kann der zumindest eine Parameter auf besonders präzise Weise ermittelt werden. Es ist denkbar, dass die Haushaltsgerätevorrichtung eine Ermittlungseinheit-Filtereinheit neben der weiteren Filtereinheit aufweist, welche dazu vorgesehen ist, der Hauptspannungs-Ermittlungseinheit, beispielsweise lediglich der Hauptspannungs-Ermittlungseinheit eine gefilterte Hauptspannung bereitzustellen. Die Ermittlungseinheit-Filtereinheit kann vorteilhaft auf besonders einfache Weise für eine bezüglich dem zumindest einen Parameter besonders unveränderlichen Filterung optimiert werden. Alternativ kann die Hauptspannungs-Ermittlungseinheit der weiteren Filtereinheit, beispielsweise unmittelbar, nachgeschaltet sein. Die weitere Filtereinheit ist vorzugsweise dazu vorgesehen, der Hauptspannungs-Ermittlungseinheit eine gefilterte Hauptspannung bereitzustellen. Die weitere Filtereinheit ist vorzugsweise dazu vorgesehen, der Hauptspannungs-Ermittlungseinheit eine Energieversorgung und insbesondere einen Schutz, insbesondere vor Abnormalitäten des Hauptversorgungssignals, bereitzustellen. Vorteilhaft kann die Hauptspannungs-Ermittlungseinheit auf besonders kosteneffiziente und/oder platzeffiziente und/oder sichere Weise, insbesondere vor Überspannungsspitzen und dergleichen, geschützt werden. Vorteilhaft kann eine Anzahl an Bauteilen in der Haushaltsgerätevorrichtung durch die Verwendung der weiteren Filtereinheit zur Filterung des der Hauptspannungs-Ermittlungseinheit bereitgestellten Signals reduziert werden.

Alternativ wäre denkbar, dass die Hauptversorgungs-Ermittlungseinheit auf eine andere, dem Fachmann als sinnvoll erscheinende Weise, in der Haushaltsgerätevorrichtung verschaltet ist.

Ferner wird vorgeschlagen, dass die Haushaltsgerätevorrichtung zumindest eine Busentladungseinheit zumindest zu einem Entladen des Buskondensators aufweist, wobei die Einschaltstrombegrenzungseinheit und die Busentladungseinheit zumindest teilweise einstückig miteinander ausgebildet sind. Vorteilhaft kann durch die Busentladungseinheit eine regenerative Entladung des Buskondensators bereitgestellt werden, wodurch insbesondere eine Energieeffizienz gesteigert werden kann. Es kann insbesondere eine periodische, zumindest teilweise Entladung des Buskondensators mit vernachlässigbaren Verlusten ermöglicht werden. Ferner kann mittels der Busentladungseinheit eine besonders effiziente und/oder präzise Erkennung einer Anwesenheit einer Aufstelleinheit, insbesondere eine Gargeschirrerkennung, ermöglicht werden. Vorteilhaft kann ein akustisches Geräusch bei der Erkennung der Anwesenheit der Aufstelleinheit durch die Entladung des Buskondensators vorteilhaft reduziert werden. Ferner kann die Haushaltsgerätevorrichtung mittels der Einschaltstrombegrenzungseinheit und mittels der Busentladungseinheit, insbesondere durch die zumindest teilweise einstückige Ausbildung dieser besonders kosten- und/oder platzeffizient, vorteilhaft zwei Funktionalitäten bereitstellen. Die Busentladungseinheit ist vorzugsweise zu einem, insbesondere in Abhängigkeit einer Periodizität der Hauptspannung, periodischen Entladen des Buskondensators, vorgesehen. Die Busentladungseinheit kann zu dem Entladen des Buskondensators beispielsweise zu der Erkennung der Anwesenheit der Aufstelleinheit, insbesondere auf dem Induktionskochfeld, vorgesehen sein. Die Aufstelleinheit ist vorzugsweise als ein Gargeschirr, welches insbesondere mittels der Induktionseinheit beheizbar ist, oder als ein Haushaltskleingerät, welches insbesondere mittels der Induktionseinheit beheizbar und/oder zu einem Betrieb des Haushaltskleingeräts mit Energie versorgbar ist, ausgebildet. Das Haushaltskleingerät ist vorzugsweise portabel ausgebildet und insbesondere von dem Bediener händisch transportierbar. Vorzugsweise ist das Haushaltskleingerät als ein Garkleingerät, insbesondere als ein Kochkleingerät, ausgebildet. Das Haushaltskleingerät kann beispielsweise als Reiskocher, als ein Air-Fryer, als ein Mixer, als ein Entsafter, als eine Küchenmaschine, als ein Wasserkocher, als eine Kaffeemaschine und/oder dergleichen ausgebildet sein. Die Haushaltsgerätevorrichtung, insbesondere die Induktionskochfeldvorrichtung, kann zumindest eine Erkennungseinheit zur Erkennung der Anwesenheit der Aufstelleinheit aufweisen. Die Busentladungseinheit kann zu einem lediglich teilweisen Entladen oder zu einem vollständigen Entladen des Buskondensators vorgesehen sein. Vorteilhaft ist ein Ladezustand des Buskondensators durch die Entladung mittels der Buskondensatorentladungseinheit, insbesondere besonders präzise, einstellbar. Vorzugsweise ist der Buskondensator mittels der Busentladungseinheit zu einer Reduktion eines Störsignals, beispielsweise während der Erkennung einer Aufstelleinheit, insbesondere vollständig, entladbar. Vorzugsweise ist eine Störung, insbesondere bedingt durch eine elektromagnetische Interferenz und/oder eine magnetische Kopplung, für den entladenen Buskondensator reduzierbar gegenüber einer Störung für den geladenen Buskondensator. Alternativ oder zusätzlich kann die Busentladungseinheit dazu vorgesehen sein, den Buskondensator zu dem Ladezustand mit einer vorgegebenen Ladung größer Null und insbesondere kleiner als eine Ladung eines vollständig aufgeladenen Buskondensators zu entladen. Der Buskondensator in dem Ladezustand kann dazu vorgesehen sein, eine einstellbare Spannung, insbesondere kleiner der Hauptspannung, und/oder einen einstellbaren Strom, insbesondere kleiner dem Hauptstrom, bereitzustellen, beispielsweise zu einer Generierung eines Detektionssignals zur Erkennung der Anwesenheit der Aufstelleinheit. Alternativ kann die Busentladungseinheit dazu vorgesehen sein, den Buskondensator zu einer jeglichen weiteren, dem Fachmann als sinnvoll erscheinenden Funktion, insbesondere zu dem einstellbaren Ladezustand, zu entladen. Der Buskondensator ist vorzugsweise über den Gleichrichter aufladbar, wobei der Gleichrichter insbesondere einen Aufladepfad zu einem Aufladen des Buskondensators bereitstellt. Die Busentladungseinheit ist vorzugsweise zu einer Bereitstellung eines Entladungspfads zu dem Entladen des Buskondensators vorgesehen. Die Busentladungseinheit ist vorzugsweise zu dem, insbesondere regenerativen, Entladen des Buskondensators über die Hauptversorgungseinheit, insbesondere über ein Stromnetz, vorgesehen. Vorteilhaft kann eine Energieeffizienz der Haushaltsgerätevorrichtung gesteigert werden, insbesondere gegenüber einem resistiven Entladen mittels eines Widerstandselements oder dergleichen, wobei die Ladung des Buskondensators verlustreich dissipiert, und insbesondere ein verlustfreies Entladen bereitgestellt werden. Vorzugsweise ist die Busentladungseinheit jeweils zu dem Entladen innerhalb einer Periodendauer der Hauptspannung vorgesehen.

Darunter, dass die Einschaltstrombegrenzungseinheit und die Busentladungseinheit zumindest teilweise einstückig miteinander ausgebildet sind soll insbesondere verstanden werden, dass die Einschaltstrombegrenzungseinheit und die Busentladungseinheit zumindest ein elektrisches und/oder elektronisches Element teilen. Vorzugsweise sind die Einschaltstrombegrenzungseinheit und die Busentladungseinheit lediglich teilweise einstückig miteinander ausgebildet. Alternativ wäre denkbar, dass die Einschaltstrombegrenzungseinheit und die Busentladungseinheit vollständig einstückig miteinander ausgebildet sind und insbesondere alle elektrischen und/oder elektronischen Elemente teilen. Bevorzugt teilen die Einschaltstrombegrenzungseinheit und die Busentladungseinheit das zumindest eine Zusatzschaltelement. Vorteilhaft können eine Kosteneffizienz der Haushaltsgerätevorrichtung gesteigert und insbesondere eine Komplexität der Haushaltsgerätevorrichtung reduziert werden. Insbesondere kann eine Anzahl an elektrischen und/oder elektronischen Bauteilen, insbesondere an Schaltelementen, der Haushaltsgerätevorrichtung vorteilhaft reduziert werden. Die Busentladungseinheit weist vorzugsweise zumindest einen weiteren Zusatzschalter auf, welcher insbesondere das Zusatzschaltelement mit dem Zusatzschalter der Einschaltstrombegrenzungseinheit teilt. Vorzugsweise weisen die Einschaltstrombegrenzungseinheit, insbesondere der Zusatzschalter, und die Busentladungseinheit, insbesondere der weitere Zusatzschalter, jeweils eigene, insbesondere separat voneinander ausgebildete, unidirektionale elektrische Bauelemente, insbesondere Dioden, auf. Vorzugsweise teilen die Einschaltstrombegrenzungseinheit und die Busentladungseinheit lediglich das Zusatzschaltelement. Das jeweilige unidirektionale elektrische Bauelement ist vorzugsweise jeweils seriell mit dem Zusatzschaltelement verschaltet. Vorzugsweise ist das jeweilige unidirektionale elektrische Bauelement, insbesondere entlang einer Durchlassrichtung des unidirektionalen elektrischen Bauelements, jeweils dem Zusatzschaltelement, insbesondere unmittelbar, vorgeschaltet. Das Zusatzschaltelement ist zu dem Entladen des Buskondensators vorzugsweise in dem geschlossenen Zustand. Das unidirektionale elektrische Bauelement, insbesondere die Diode, der Busentladungseinheit weist vorzugsweise die Durchlassrichtung entlang der Entladerichtung eines Entladepfads auf. Vorzugsweise weist die Busentladungseinheit zumindest zwei Zusatzschaltelemente, insbesondere das mit der Einschaltstrombegrenzungseinheit geteilte Zusatzschaltelement und ein, insbesondere von der Einschaltstrombegrenzungseinheit separat ausgebildetes, zusätzliches Zusatzschaltelement, auf, welche in ihrem geschlossenen Zustand den Entladungspfad bereitstellen. Das Zusatzschaltelement ist vorzugsweise als ein Highside-Schaltelement ausgebildet. Das zusätzliche Zusatzschaltelement ist vorzugsweise als ein Lowside-Schaltelement ausgebildet. Alternativ wäre eine umgekehrte Ausgestaltung denkbar. Unter einem "Highside-Schaltelement" soll in diesem Zusammenhang ein Schaltelement verstanden werden, welches in einem montierten Zustand der Haushaltsgerätevorrichtung zwischen einem positiven Leiter, insbesondere Außenleiter, des Hauptstroms und einer elektrischen Last, insbesondere dem Buskondensator, angeordnet ist. Unter einem "Lowside-Schaltelement" soll in diesem Zusammenhang ein Schaltelement verstanden werden, welches in dem montierten Zustand der Haushaltsgerätevorrichtung zwischen einem negativen Leiter, insbesondere Neutralleiter und/oder Nullleiter, des Hauptstroms und der elektrischen Last, insbesondere dem Buskondensator, angeordnet ist. Die Steuereinheit ist vorzugsweise zumindest zu einer Steuerung der, Busentladungseinheit, insbesondere des Zusatzschaltelements und des zusätzlichen Zusatzschaltelements, vorgesehen.

Der Gleichrichter weist vorzugsweise zumindest ein Gleichrichtelement, vorzugsweise eine Diode, auf, welches zu dem Zusatzschaltelement parallelgeschaltet ist. Insbesondere kann der Entladepfad, insbesondere in eine Entladerichtung entgegengesetzt zu einer Durchlassrichtung des Gleichrichtelements, besonders vorteilhaft bereitgestellt werden.

Der Buskondensator ist insbesondere vorteilhaft entlang dem Gleichrichter aufladbar und entlang dem Zusatzschaltelement zumindest entladbar. Das Gleichrichtelement ist vorzugsweise zu einer unidirektionalen Stromübertragung, insbesondere in eine Richtung zu dem Aufladen des Buskondensators, vorgesehen. Das Gleichrichtelement und das, insbesondere dem Zusatzschaltelement vorgeschaltete, unidirektionale elektronische Bauelement der Busentladungseinheit weisen vorzugsweise eine entgegengesetzte Durchlassrichtung auf. Vorzugsweise ist das unidirektionale elektronische Bauelement der Busentladungseinheit zu dem Gleichrichtelement parallelgeschaltet. Der Zusatzschalter der Busentladungseinheit ist vorzugsweise zu dem Gleichrichtelement parallelgeschaltet und insbesondere zu einer Überbrückung des Gleichrichtelements zu dem Entladen vorgesehen. Das unidirektionale elektronische Bauelement der Einschaltstrombegrenzungseinheit ist vorzugsweise, insbesondere elektrisch und/oder elektronisch, mit einem Knotenpunkt auf einer Leitung zwischen dem unidirektionalen elektronischen Bauelement der Busentladungseinheit und dem Zusatzschaltelement verbunden. Vorzugsweise weist der Gleichrichter zumindest ein weiteres Gleichrichtelement, insbesondere eine weitere Diode, auf, welches vorzugsweise dem zusätzlichen Zusatzschaltelement, sowie insbesondere einem zusätzlichen, insbesondere dem zusätzlichen Zusatzschaltelement vorgeschalteten, weiteren unidirektionalen elektrischen Bauelement, insbesondere einer zusätzlichen Diode, der Busentladungseinheit parallelgeschaltet ist. Der Gleichrichter umfasst vorzugsweise zumindest vier Gleichrichterelemente. Alternativ oder zusätzlich kann das Gleichrichtelement einen Thyristor und/oder Transistor und/oder dergleichen aufweisen oder als ein solcher ausgebildet sein.

Das Zusatzschaltelement ist vorzugsweise als ein Halbleiterschaltelement ausgebildet. Vorteilhaft können/kann eine Kosteneffizienz und/oder eine Kompatibilität des Zusatzschaltelements in der Busentladungseinheit verbessert werden. Weiterhin kann eine Zeitsynchronisation eines Öffnens und/oder eines Schließens des Zusatzschaltelements, insbesondere bezüglich der Hauptspannung und/oder des Hauptstroms, verbessert werden. Vorteilhaft kann ein Delay einer Reaktion des Zusatzschalters bei einer Ansteuerung des Zusatzschalters, insbesondere zu dem Öffnen und/oder dem Schließen, insbesondere zumindest gegenüber einem als ein elektromechanisches Relais ausgebildeten Zusatzschaltelements, verkürzt werden und/oder eine zuverlässigere Zeitdauer aufweisen. Vorzugsweise weist die Haushaltsgerätevorrichtung zumindest eine Überspannungsbegrenzungseinheit auf, welche insbesondere zu einer Begrenzung von Überspannungsspitzen der Hauptspannung, beispielsweise auf weniger als 800 V, zumindest an dem Zusatzschalter vorgesehen ist. Das Zusatzschaltelement, insbesondere das Halbleiterschaltelement, ist vorzugsweise als ein Transistor, insbesondere als ein Metall-Oxid-Halbleiter-Feldeffekttransistor (MOSFET) oder als Organischer Feldeffekttransistor (OFET), vorteilhaft als Bipolartransistor mit vorzugsweise isolierter Gate-Elektrode (IGBT), ausgebildet. Das Halbleiterschaltelement kann beispielsweise als ein PNP-Transistor oder als ein NPN-Transistor ausgebildet sein. Alternativ oder zusätzlich kann das Zusatzschaltelement insbesondere einen Thyristor und/oder ein OptoTRIAC und/oder ein Halbleiterrelais und/oder dergleichen aufweisen, oder als ein solches/solcher ausgebildet sein. Insbesondere ist eine jegliche, dem Fachmann als sinnvoll erscheinende Ausgestaltung des Halbleiterschaltelements denkbar. Vorzugsweise sind das Zusatzschaltelement und das zusätzliche Zusatzschaltelement identisch zueinander ausgebildet. Alternativ wäre denkbar, dass das Zusatzschaltelement und das zusätzliche Zusatzschaltelement unterschiedlich zueinander ausgebildet sind.

Alternativ ist denkbar, dass das Zusatzschaltelement als ein elektromechanisches Relais oder als ein anders, dem Fachmann als sinnvoll erscheinendes, insbesondere sich von einem Halbleiterschaltelement unterscheidendendes, Zusatzschaltelement ausgebildet ist. Der Delay des elektromechanischen Relais ist insbesondere typischerweise in einer Größenordnung von 1 ms bis 4 ms und insbesondere abhängig von einem Treiber und/oder einer Temperatur und/oder einer Produktionscharge. Das elektromechanische Relais weist vorteilhaft eine bezüglich dem Halbleiterschaltelement gesteigerte Stabilität und/oder ein verbessertes Standhalten gegenüber den Überspannungsspitzen der Hauptspannung, insbesondere auch größer 1000 V, auf.

Vorzugsweise ist die Einschaltstrombegrenzungseinheit zu einem Aufladen des Filterkondensators und/oder des Buskondensators vor einem Schließen des Hauptversorgungsschalters zur Begrenzung des Einschaltstroms vorgesehen. Vorteilhaft kann ein Spannungsabfall zumindest an dem Hauptversorgungsschalter bei dem Schließen des Hauptversorgungsschalters durch das vorherige Aufladen des Filterkondensators und/oder des Buskondensators reduziert oder vermieden werden. Der Filterkondensator und/oder der Buskondensator sind zur Begrenzung des Einschaltstroms vorzugsweise mittels des Hauptstroms und/oder der Hauptspannung mit einer Spannung, insbesondere ausgehend der Hauptversorgungseinheit, aufladbar. Vorzugsweise ist durch die Parallelschaltung des Hauptversorgungsschalters und der Einschaltstrombegrenzungseinheit jeweils ein Hauptstromübertragungspfad, insbesondere zu einem Betrieb der Funktionseinheit, über den Hauptversorgungsschalter und, insbesondere zu dem Aufladen, über die Einschaltstrombegrenzungseinheit, insbesondere über das Zusatzschaltelement, bereitgestellt. Vorzugsweise sind/ist der Hauptstrom und/oder die Hauptspannung über den Hauptversorgungsschalter und die Einschaltstrombegrenzungseinheit, bevorzugt in einem jeweiligen Zustand, lediglich entweder über den Hauptversorgungsschalter oder über die Einschaltstrombegrenzungseinheit übertragbar. Der Hauptversorgungsschalter ist während des Aufladens insbesondere in dem geöffneten Zustand, wobei insbesondere der Hauptstromübertragungspfad lediglich über die Einschaltstrombegrenzungseinheit, insbesondere über das Zusatzschaltelement, bereitgestellt ist. Das Zusatzschaltelement ist während des Aufladens insbesondere in dem geschlossenen Zustand. Vorzugsweise ist der Hauptversorgungsschalter in dem geschlossenen Zustand des Zusatzschaltelements, insbesondere während des Aufladens mittels der Einschaltstrombegrenzungseinheit, in dem geöffneten Zustand. Das zusätzliche Zusatzschaltelement ist zu dem Aufladen mittels der Einschaltstrombegrenzungseinheit vorzugsweise in einem geöffneten Zustand. Das unidirektionale elektrische Bauelement, insbesondere die Diode, der Einschaltstrombegrenzungseinheit weist vorzugsweise eine Durchlassrichtung entlang der Aufladerichtung auf. Die Aufladerichtung ist vorzugsweise, insbesondere zumindest abschnittsweise in der Schaltung, entgegengesetzt zu der Entladerichtung gerichtet.

Die Steuereinheit ist vorzugsweise zu einer Steuerung des Hauptversorgungsschalters und des Zusatzschalters, insbesondere zumindest zu einem Schließvorgang des Hauptversorgungsschalters, in Abhängigkeit von der Polarität der Hauptspannung vorgesehen. Die Steuereinheit ist, insbesondere zu der Begrenzung des Einschaltstroms, vorzugsweise dazu vorgesehen, das Zusatzschaltelement und insbesondere darauffolgend den Hauptversorgungsschalter in Abhängigkeit von der Polarität der Hauptspannung zu schließen. Vorzugsweise ist die Steuereinheit, insbesondere zu der Begrenzung des Einschaltstroms, dazu vorgesehen, den Hauptversorgungsschalter und den Zusatzschalter für unterschiedliche Polaritäten der Hauptspannung innerhalb einer Periodendauer der Hauptspannung zu schließen. Die Steuereinheit ist, insbesondere zu der Begrenzung des Einschaltstroms, vorzugsweise dazu vorgesehen, das Zusatzschaltelement bei einer Polarität, vorzugsweise einer negativen Polarität oder alternativ einer positiven Polarität, der Hauptspannung zu schließen, welche insbesondere zu einem Fluss des Hauptstroms entgegengesetzt zu der Aufladerichtung entspricht, wobei das Aufladen vorzugsweise zumindest mittels des unidirektionalen elektrischen Bauelements der Einschaltstrombegrenzungseinheit gesperrt ist. Der Einschaltstrom ist vorzugsweise durch das Schließen des Zusatzschaltelements innerhalb eines gesamten Zeitfensters, insbesondere mit einer Dauer einer halben Periodendauer der Hauptspannung, zwischen zwei benachbarten Nulldurchgängen der Hauptspannung begrenzbar. Die Steuereinheit ist, insbesondere zu der Begrenzung des Einschaltstroms, vorzugsweise dazu vorgesehen, den Hauptversorgungsschalter bei einer Polarität, vorzugsweise einer positiven Polarität oder alternativ einer negativen Polarität, der Hauptspannung zu schließen, welche insbesondere zu einem Fluss des Hauptstroms entlang der Aufladerichtung entspricht, wobei das Aufladen vorzugsweise zumindest entlang dem unidirektionalen elektrischen Bauelement der Einschaltstrombegrenzungseinheit freigegeben ist. Der Einschaltstrom ist vorzugsweise durch das Schließen des Hauptversorgungsschalters innerhalb eines gesamten Zeitfensters, insbesondere mit einer Dauer einer viertel Periodendauer der Hauptspannung, zwischen einem Nulldurchgang und einer nächstfolgenden Extremstelle, vorzugsweise einem positiven Maximum oder alternativ einem negativen Minimum, der Hauptspannung begrenzbar.

Der Buskondensator ist mittels der Busentladungseinheit vorzugsweise bei einer positiven Polarität oder alternativ bei einer negativen Polarität der Hauptspannung entladbar. Die Steuereinheit kann dazu vorgesehen sein, das Zusatzschaltelement und das weitere Zusatzschaltelement zu dem Entladen des Buskondensators, insbesondere gleichzeitig, zu schließen. Der Buskondensator ist mittels der Busentladungseinheit vorzugsweise in einem gesamten Zeitfenster zwischen einer Extremstelle, beispielsweise der oben genannten Extremstelle, vorzugsweise einem positiven Maximum oder alternativ einem negativen Minimum, und einem nächstfolgenden Nulldurchgang der Hauptspannung entladbar.

Weiterhin wird ein Verfahren zu einem Betrieb einer Haushaltsgerätevorrichtung vorgeschlagen, wobei die zumindest eine Stromversorgungseinheit in zumindest einem Betriebszustand zumindest die Steuereinheit versorgt, wobei die zu dem Hauptversorgungsschalter parallel geschaltete Einschaltstrombegrenzungseinheit einen Einschaltstrom zumindest an dem Buskondensator und/oder an dem Filterkondensator begrenzt, und wobei die weitere Filtereinheit zumindest in dem Betriebszustand, insbesondere außerhalb des Stand-By Modus oder stets, zumindest den Teil des Hauptversorgungssignals zu der Versorgung der Einschaltstrombegrenzungseinheit und der Stromversorgungseinheit filtert. Vorteilhaft können eine Energieeffizienz und eine Sicherheit der Haushaltsgerätevorrichtung gesteigert werden. Das Verfahren kann einen Verfahrensschritt, insbesondere einen Stand-By Schalter-Schließschritt, aufweisen, in welchem der Stand-By Schalter, insbesondere mittels der Bedienerschnittstelle, geschlossen wird und insbesondere die Haushaltsgerätevorrichtung von dem Stand-By Modus in einen aktiven Betriebszustand transferiert wird. Das Verfahren weist vorzugsweise einen Verfahrensschritt, insbesondere zumindest einen Ermittlungsschritt auf, in welchem der zumindest eine Parameter der Hauptspannung ermittelt wird. Das auf dem zumindest einen Parameter basierende Ermittlungsergebnis wird, insbesondere in dem Ermittlungsschritt, vorzugsweise an die Steuereinheit übermittelt. Vorzugsweise weist das Verfahren einen weiteren Verfahrensschritt, insbesondere einen Hauptversorgungsschalter-Schließschritt auf, in welchem der Hauptversorgungsschalter geschlossen wird, wobei die Einschaltstrombegrenzungseinheit den Einschaltstrom begrenzt. In dem Hauptversorgungsschalter-Schließschritt werden/wird vorzugsweise zumindest der Buskondensator und/oder der Filterkondensator mittels der Einschaltstrombegrenzungseinheit aufgeladen. Das Aufladen mittels der Einschaltstrombegrenzungseinheit wird vorzugsweise mittels einer Operation des Zusatzschaltelements ausgeführt, welches zu dem Aufladen insbesondere geschlossen wird. Das Zusatzschaltelement und der Hauptversorgungsschalter werden, insbesondere in dem Hauptversorgungsschalter-Schließschritt, vorzugsweise in Abhängigkeit von dem zumindest einen Parameter der Hauptspannung gesteuert. Der Hauptversorgungsschalter-Schließschritt findet insbesondere zeitlich nach dem Ermittlungsschritt statt. Die weitere Filtereinheit filtert zumindest den Teil des Hauptversorgungssignals insbesondere zumindest in dem Hauptversorgungsschalter-Schließschritt, vorzugsweise auch in dem Ermittlungsschritt, insbesondere zumindest in einem geschlossenen Zustand des Stand-By Schalters nach dem Stand-By Schalter-Schließschritt oder stets. Die Stromversorgungseinheit versorgt die Steuereinheit stets, wenn die weitere Filtereinheit zumindest den Teil des Hauptversorgungssignals filtert. Die Haushaltsgerätevorrichtung, das Haushaltsgerät und das Verfahren zum Betrieb der Haushaltsgerätevorrichtung sollen hierbei nicht auf die oben beschriebene Anwendung und Ausführungsform beschränkt sein. Insbesondere können die Haushaltsgerätevorrichtung, das Haushaltsgerät und das Verfahren zum Betrieb der Haushaltsgerätevorrichtung zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen. Weitere Vorteile ergeben sich aus der folgenden Zeichnungsbeschreibung. In der Zeichnung sind Ausführungsbeispiele der Erfindung dargestellt.

Es zeigen:
- Fig. 1: Eine schematische Draufsicht eines als Induktionskochfeld ausgebildeten Haushaltsgeräts,
- Fig. 2: einen vereinfachten Schaltplan einer Haushaltsgerätevorrichtung des Haushaltsgeräts mit gekennzeichneten Pfaden eines Hauptstroms,
- Fig. 3: den Schaltplan mit einer Kennzeichnung verschiedener Module,
- Fig. 4: Graphen bezüglich einer Schaltcharakteristik eines Hauptversorgungsschalters und eines Zusatzschaltelements der Haushaltsgerätevorrichtung,
- Fig. 5: ein Ablaufdiagramm eines Verfahrens zu einem Betrieb der Haushaltsgerätevorrichtung, und
- Fig. 6: einen vereinfachten Schaltplan einer alternativen Haushaltsgerätevorrichtung.

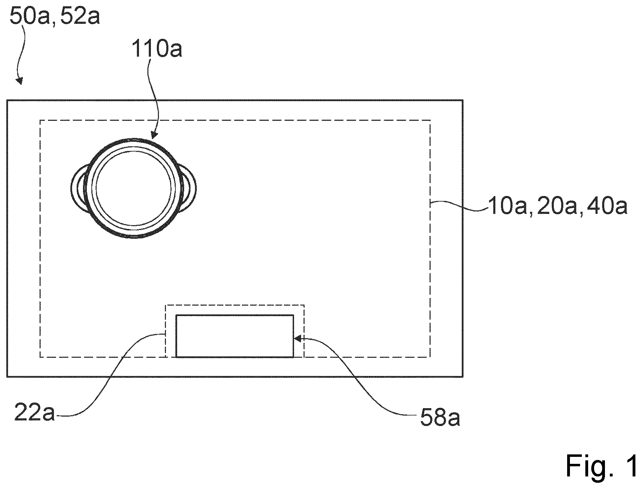

Figur 1 zeigt eine schematische Draufsicht auf ein als Induktionskochfeld 52a ausgebildetes Haushaltsgerät 50a.

Alternativ kann das Haushaltsgerät 50a als ein jegliches, dem Fachmann als sinnvoll erscheinendes Haushaltsgerät (nicht dargestellt) ausgebildet sein, beispielsweise als ein anderes Gargerät und/oder als ein Dunstabzugsgerät oder als ein Haushaltskühlgerät, insbesondere als eine Klimaanlage, oder als ein Haushaltsreinigungsgerät oder dergleichen.

Das Haushaltsgerät 50a weist eine Haushaltsgerätevorrichtung 10a auf. Die Haushaltsgerätevorrichtung 10a ist als eine Induktionskochfeldvorrichtung 20a ausgebildet.

Die Haushaltsgerätevorrichtung 10a ist vorliegend als zumindest ein Teil einer elektrischen und/oder einer elektronischen Schaltung 40a des Haushaltsgeräts 50a ausgebildet. Alternativ ist denkbar, dass die Haushaltsgerätevorrichtung 10a das gesamte Haushaltsgerät 50a umfasst.

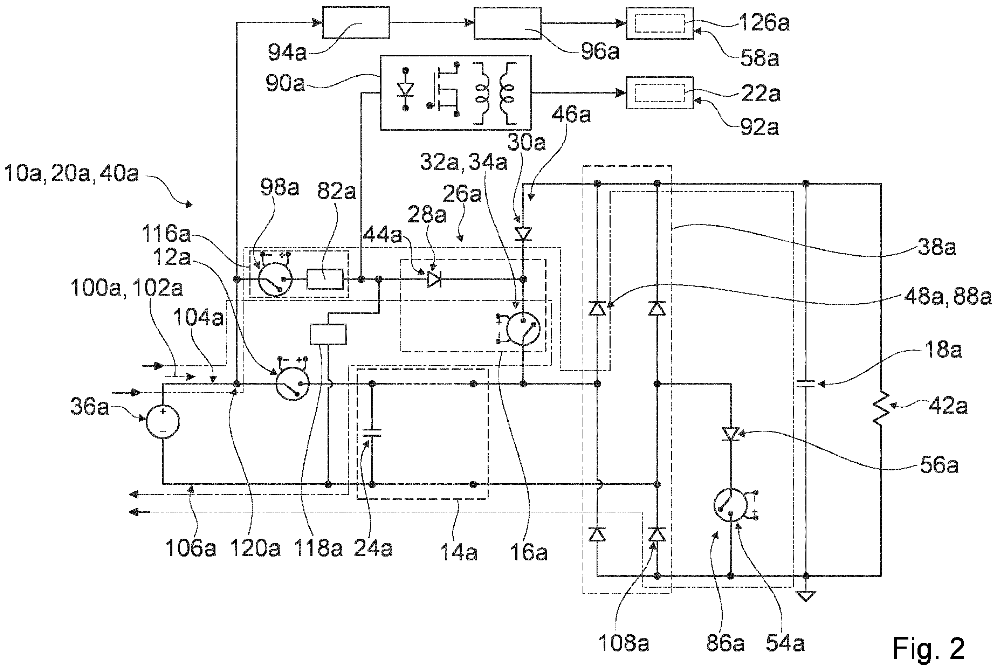

Figur 2 zeigt ein vereinfachtes Schaltbild der Haushaltsgerätevorrichtung 10a. Die Haushaltsgerätevorrichtung 10a weist einen Hauptversorgungsschalter 12a auf. Der Hauptversorgungsschalter 12a ist als ein elektromechanisches Relais ausgebildet. Alternativ wäre eine andere, dem Fachmann als sinnvoll erscheinende Ausgestaltung des Hauptversorgungsschalters 12a denkbar, beispielsweise als ein Halbleiterschalter.

Der Hauptversorgungsschalter 12a ist in einem geschlossenen Zustand zu einer Übertragung zumindest eines Teils eines Hauptversorgungssignals aufweisend einen Hauptstrom und eine Hauptspannung ausgehend von einer Hauptversorgungseinheit 36a vorgesehen. Der Hauptversorgungsschalter 12a ist, zumindest in einem Betriebszustand einer Induktionseinheit (nicht dargestellt) zu einer Emission einer induktiven Energie von der Induktionseinheit, geschlossen. Der Hauptversorgungsschalter 12a ist in einem offenen Zustand zu einem Aussetzen der Übertragung des Hauptversorgungssignals vorgesehen.

Die Hauptversorgungseinheit 36a ist Teil der Haushaltsgerätevorrichtung 10a. Die Haushaltsgerätevorrichtung 10a, insbesondere zumindest die Induktionseinheit, ist mittels des Hauptversorgungssignals aufweisend den Hauptstrom und die Hauptspannung betreibbar. Die Hauptversorgungseinheit 36a ist als ein Netzanschluss zu einem Stromübertragungsnetz ausgebildet. Die Hauptspannung ist als eine Netzspannung ausgebildet. Der Hauptstrom ist als ein Netzstrom ausgebildet. Alternativ kann die Hauptversorgungseinheit 36a als zumindest ein Generator oder dergleichen ausgebildet sein.

Die Haushaltsgerätevorrichtung 10a weist zumindest eine Filtereinheit 14a auf, welche zumindest einen Filterkondensator 24a aufweist. Die Filtereinheit 14a ist als eine EMV-Filtereinheit ausgebildet. Der Filterkondensator 24a ist als ein Entstörkondensator, insbesondere der Klasse X, ausgebildet. Der Filterkondensator 24a kann beispielhaft eine Kapazität von 2,2 µF aufweisen. Alternativ ist ein anderer, dem Fachmann bekannter Filterkondensator 24a und/oder ein anderer Kapazitätswert des Filterkondensators 24a denkbar.

Die Filtereinheit 14a weist mehr als einen Filterkondensator 24a auf, wobei lediglich ein Filterkondensator 24a bezeichnet ist. Vorliegend weist die Filtereinheit 14a genau zwei Filterkondensatoren 24a auf. Alternativ ist eine andere, dem Fachmann als sinnvoll erscheinende und insbesondere bekannte Ausgestaltung der Filtereinheit 14a denkbar.

Die Haushaltsgerätevorrichtung 10a weist zumindest einen Gleichrichter 38a auf. Der Gleichrichter 38a ist der Filtereinheit 14a nachgeschaltet. Der Gleichrichter 38a ist dazu vorgesehen den, insbesondere mittels der Filtereinheit 14a gefilterten, Hauptstrom in einen Gleichstrom umzuwandeln. Der Gleichrichter 38a ist als ein Brückengleichrichter ausgebildet.

Der Gleichrichter 38a weist zumindest ein Gleichrichtelement 48a auf. Der Gleichrichter 38a weist vorliegend genau vier Gleichrichtelemente 48a, 108a auf, wobei lediglich ein Gleichrichtelement 48a und ein weiteres Gleichrichtelement 108a bezeichnet sind. Das Gleichrichtelement 48a ist als eine Diode 88a ausgebildet. Die Gleichrichtelemente 48a, 108a sind identisch zueinander ausgebildet. Das Gleichrichtelement 48a ist vorliegend als ein Highside-Gleichrichtelement ausgebildet. Das weitere Gleichrichtelement 108a ist vorliegend als ein Lowside-Gleichrichtelement ausgebildet.

Die Haushaltsgerätevorrichtung 10a weist zumindest einen Buskondensator 18a auf. Der Buskondensator 18a ist dem Gleichrichter 38a nachgeschaltet. Der Gleichrichter 38a ist dazu vorgesehen, den Gleichstrom an den Buskondensator 18a anzulegen und diesen insbesondere aufzuladen. Der Buskondensator 18a ist als ein Glättungskondensator ausgebildet. Der Buskondensator 18a ist zu einer Glättung des Gleichstroms ausgehend des Gleichrichters 38a vorgesehen. Der Buskondensator 18a kann beispielhaft eine Kapazität von 6,6 µF aufweisen. Alternativ ist ein anderer Kapazitätswert des Buskondensators 18a denkbar.

Die Haushaltsgerätevorrichtung 10a weist zumindest einen Wechselrichter (nicht dargestellt) auf, welcher dem Buskondensator 18a nachgeschaltet ist. Die Haushaltsgerätevorrichtung 10a weist zumindest eine Funktionseinheit (nicht dargestellt), insbesondere die Induktionseinheit, auf, welche dem Buskondensator 18a, insbesondere dem Wechselrichter, nachgeschaltet ist. Der Wechselrichter ist Teil einer Leistungseinheit (nicht dargestellt) zu einer Erzeugung eines Heizfrequenzsignals zu einem Betrieb der Funktionseinheit. Die Induktionseinheit, insbesondere zumindest eine Induktionsspule der Induktionseinheit, ist durch den durch den Wechselrichter generierten Wechselstrom versorgbar. Ein Ersatzwiderstandselement 42a repräsentiert schematisch zumindest den Wechselrichter, insbesondere die Leistungseinheit, und die Funktionseinheit, insbesondere die Induktionseinheit.

Die Haushaltsgerätevorrichtung 10a weist eine zu dem Hauptversorgungsschalter 12a parallel geschaltete Einschaltstrombegrenzungseinheit 16a zu einer Begrenzung eines Einschaltstroms zumindest an dem Buskondensator 18a und an dem Filterkondensator 24a auf.

Der Buskondensator 18a ist der Einschaltstrombegrenzungseinheit 16a zumindest entlang einer Referenzstromrichtung 100a des Hauptstroms nachgeschaltet. Die Filtereinheit 14a ist der Einschaltstrombegrenzungseinheit 16a zumindest entlang der Referenzstromrichtung 100a des Hauptstroms nachgeschaltet.

Die Einschaltstrombegrenzungseinheit 16a ist zu einer Begrenzung des Einschaltstroms zumindest bei Schließen des Hauptversorgungsschalters 12a vorgesehen. Der Einschaltstrom ist ein Einschaltstrom des Hauptstroms zumindest bei Schließen des Hauptversorgungsschalters 12a. Die Einschaltstrombegrenzungseinheit 16a ist zu einer Begrenzung des Einschaltstroms an dem Hauptversorgungsschalter 12a vorgesehen.

Die Einschaltstrombegrenzungseinheit 16a ist zu einer Begrenzung eines DC-Einschaltstroms zumindest an der Filtereinheit 14a vorgesehen. Die Einschaltstrombegrenzungseinheit 16a ist zu einer Begrenzung eines AC-Einschaltstroms zumindest an dem Buskondensator 18a vorgesehen.

Die Haushaltsgerätevorrichtung 10a weist zumindest eine Busentladungseinheit 26a zumindest zu einem Entladen des Buskondensators 18a auf. Die Busentladungseinheit 26a ist zu dem Entladen des Buskondensators 18a zu einem vorgegebenen Ladezustand vorgesehen. Die Busentladungseinheit 26a ist zu einem regenerativen Entladen des Buskondensators 18a über die Hauptversorgungseinheit 36a vorgesehen. Die Busentladungseinheit 26a stellt einen Bus-Entladungspfad (nicht dargestellt) bereit.

Die Busentladungseinheit 26a kann beispielsweise zu dem Entladen des Buskondensators 18a zu einer Erkennung einer Anwesenheit einer Aufstelleinheit 110a (vgl. Figur 1), insbesondere auf dem Induktionskochfeld 52a, vorgesehen sein. Alternativ kann die Busentladungseinheit 26a dazu vorgesehen sein, den Buskondensator 18a zu einer jeglichen weiteren, dem Fachmann als sinnvoll erscheinenden Funktion, insbesondere zu dem einstellbaren Ladezustand, zu entladen.

Die Einschaltstrombegrenzungseinheit 16a ist zu einem Aufladen des Filterkondensators 24a und des Buskondensators 18a vor einem Schließen des Hauptversorgungsschalters 12a zur Begrenzung des Einschaltstroms vorgesehen. Die Einschaltstrombegrenzungseinheit 16a ist zu dem Aufladen unmittelbar vor dem Schließen des Hauptversorgungsschalters 12a vorgesehen.

Der Hauptversorgungsschalter 12a ist während des Aufladens in dem geöffneten Zustand. Die Einschaltstrombegrenzungseinheit 16a ist zu dem Aufladen für eine Aufladerichtung 102a des Hauptstroms vorgesehen.

Die Referenzstromrichtung 100a des Hauptstroms entspricht vorliegend einer positiven Polarität der Hauptspannung. Die Referenzstromrichtung 100a des Hauptstroms entspricht vorliegend der Aufladerichtung 102a.

Alternativ ist denkbar, dass die Referenzstromrichtung 100a und/oder die Aufladerichtung 102a einer negativen Polarität der Hauptspannung entspricht, wobei insbesondere ein unidirektionales elektrisches Bauelement 28a der Einschaltstrombegrenzungseinheit 16a und/oder ein unidirektionales elektrisches Bauelement 30a der Busentladungseinheit 26a eine bezüglich Figur 2 umgekehrte Orientierung aufweisen/aufweist. Alternativ ist denkbar, dass die Referenzstromrichtung 100a entgegengesetzt der Aufladerichtung 102a ausgerichtet ist.

Vorliegend ist der Hauptversorgungsschalter 12a an einem Außenleiter 104a angeordnet und kontaktiert diesen insbesondere. Alternativ kann der Hauptversorgungsschalter 12a an einem Neutralleiter 106a angeordnet sein und diesen insbesondere kontaktieren.

Die Einschaltstrombegrenzungseinheit 16a stellt einen Filterkondensator-Aufladepfad 112a bereit. Die Einschaltstrombegrenzungseinheit 16a stellt einen Buskondensator-Aufladepfad 114a bereit.

Die Einschaltstrombegrenzungseinheit 16a weist zumindest einen unidirektionalen Zusatzschalter 44a auf. Die Einschaltstrombegrenzungseinheit 16a ist vorliegend als der unidirektionale Zusatzschalter 44a ausgebildet.

Der unidirektionale Zusatzschalter 44a der Einschaltstrombegrenzungseinheit 16a ist dazu vorgesehen, den Hauptstrom in einem geschlossenen Zustand lediglich in die Aufladerichtung 102a des Hauptstroms zu übertragen. Die Einschaltstrombegrenzungseinheit 16a ist zu dem Aufladen lediglich für die Aufladerichtung 102a des Hauptstroms vorgesehen. Der unidirektionale Zusatzschalter 44a der Einschaltstrombegrenzungseinheit 16a ist dazu vorgesehen, einen Übertrag des Hauptstroms und der Hauptspannung in einem geöffneten Zustand zu unterbrechen.

Die Einschaltstrombegrenzungseinheit 16a, insbesondere der Zusatzschalter 44a, weist zumindest das unidirektionale elektrische Bauelement 28a und zumindest ein zu dem unidirektionalen elektrischen Bauelement 28a in Serie geschaltetes Zusatzschaltelement 32a auf. Das unidirektionale elektrische Bauelement 28a ist als eine Diode ausgebildet.

Das unidirektionale elektrische Bauelement 28a der Einschaltstrombegrenzungseinheit 16a ist zu einer Übertragung des Hauptstroms lediglich entlang der Aufladerichtung 102a vorgesehen. Das Zusatzschaltelement 32a ist dem unidirektionalen elektrischen Bauelement 28a der Einschaltstrombegrenzungseinheit 16a entlang der Referenzstromrichtung 100a nachgeschaltet.

Die Einschaltstrombegrenzungseinheit 16a und die Busentladungseinheit 26a sind zumindest teilweise einstückig miteinander ausgebildet.

Die Busentladungseinheit 26a weist zumindest einen unidirektionalen Zusatzschalter 46a auf. Die Busentladungseinheit 26a, insbesondere der unidirektionale Zusatzschalter 46a, weist das Zusatzschaltelement 32a auf. Das Zusatzschaltelement 32a ist als ein Highside-Schaltelement ausgebildet. Die Busentladungseinheit 26a, insbesondere der Zusatzschalter 46a, weist zumindest das unidirektionale elektrische Bauelement 30a auf, welches insbesondere zu dem Zusatzschaltelement 32a der Busentladungseinheit 26a in Serie geschaltet ist. Das unidirektionale elektrische Bauelement 28a der Busentladungseinheit 26a ist als eine Diode ausgebildet.

Die Einschaltstrombegrenzungseinheit 16a und die Busentladungseinheit 26a teilen zumindest das Zusatzschaltelement 32a. Die Einschaltstrombegrenzungseinheit 16a und die Busentladungseinheit 26a unterscheiden sich, insbesondere lediglich, um das jeweilige unidirektionale elektrische Bauelement 28a, 30a.

Das Gleichrichtelement 48a ist zu dem Zusatzschaltelement 32a parallelgeschaltet. Das unidirektionale elektrische Bauelement 30a der Busentladungseinheit 26a ist dem Gleichrichtelement 48a parallelgeschaltet. Der Zusatzschalter 46a der Busentladungseinheit 26a ist dem Gleichrichtelement 108a parallelgeschaltet. Der Buskondensator 18a ist entlang dem Gleichrichtelement 48a aufladbar und entlang dem Zusatzschaltelement 32a entladbar.

Die Busentladungseinheit 26a weist einen zusätzlichen Zusatzschalter 86a auf. Die Busentladungseinheit 26a, insbesondere der zusätzliche Zusatzschalter 86a, weist zumindest ein zusätzliches unidirektionales elektrisches Bauelement 56a und zumindest ein zu dem zusätzlichen unidirektionalen elektrischen Bauelement 56a in Serie geschaltetes zusätzliches Zusatzschaltelement 54a auf.

Das zusätzliche Zusatzschaltelement 54a ist als ein Lowside-Schaltelement ausgebildet. Der zusätzliche Zusatzschalter 86a ist dem weiteren Gleichrichtelement 108a parallelgeschaltet. Das zusätzliche Zusatzschaltelement 54a ist dem weiteren Gleichrichtelement 108a parallelgeschaltet. Das zusätzliche unidirektionale elektrische Bauelement 56a ist dem weiteren Gleichrichtelement 108a parallelgeschaltet.

Alternativ können die Einschaltstrombegrenzungseinheit 16a und die Busentladungseinheit 26a das, insbesondere als Lowside-Schaltelement ausgebildete, zusätzliches Zusatzschaltelement 54a teilen.

Das Zusatzschaltelement 32a ist als ein Halbleiterschaltelement 34a ausgebildet. Das Zusatzschaltelement 32a und das zusätzliche Zusatzschaltelement 54a sind identisch zueinander ausgebildet. Alternativ wäre denkbar, dass das Zusatzschaltelement 32a und das zusätzliche Zusatzschaltelement 54a unterschiedlich zueinander ausgebildet sind.

Alternativ ist denkbar, dass das Zusatzschaltelement 32a als ein elektromechanisches Relais oder als ein anderes, dem Fachmann als sinnvoll erscheinendes, insbesondere sich von einem Halbleiterschaltelement 34a unterscheidendendes, Zusatzschaltelement 32a ausgebildet ist.

Der Hauptversorgungsschalter 12a ist der Hauptversorgungseinheit 36a und der Filtereinheit 14a zwischengeschaltet. Der Hauptversorgungsschalter 12a ist der Hauptversorgungseinheit 36a zumindest entlang der Referenzstromrichtung 100a, insbesondere unmittelbar, nachgeschaltet. Die Filtereinheit 14a ist dem Hauptversorgungsschalter 12a zumindest entlang der Referenzstromrichtung 100a, insbesondere unmittelbar, nachgeschaltet. Die Filtereinheit 14a ist der Einschaltstrombegrenzungseinheit 16a zumindest entlang der Referenzstromrichtung 100a, insbesondere unmittelbar, nachgeschaltet.

Die Haushaltsgerätevorrichtung 10a weist eine Steuereinheit 22a auf. Die Steuereinheit 22a ist zumindest zu einer Steuerung des Hauptversorgungsschalters 12a und des Zusatzschaltelements 32a in Abhängigkeit von zumindest einem Parameter, insbesondere von einer Polarität, der Hauptspannung vorgesehen. Die Steuereinheit 22a ist zu einer Steuerung des zumindest einen Wechselrichters und der Busentladungseinheit 26a vorgesehen. Die Steuereinheit 22a ist über eine Bedienerschnittstelle 58a des Haushaltsgeräts 50a durch einen Bediener (nicht dargestellt) zumindest zu der Steuerung des Hauptversorgungsschalters 12a und des Zusatzschalters 44a, insbesondere zu der Steuerung des zumindest einen Wechselrichters und der Busentladungseinheit 26a, einstellbar.

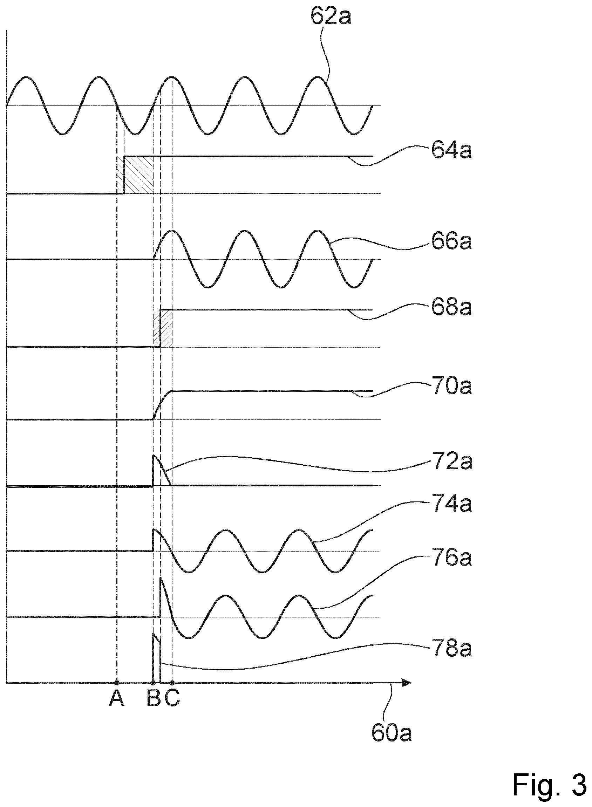

Figur 3 zeigt Graphen zu einer Beschreibung einer Schaltcharakteristik der Haushaltsgerätevorrichtung 10a zu dem Schließvorgang des Hauptversorgungsschalters 12a mit dem Aufladen mittels der Einschaltstrombegrenzungseinheit 16a. Eine Kurve 62a beschreibt die Hauptspannung über einer Achse 60a einer Zeit.

Eine Kurve 64a beschreibt einen Schaltzustand des Zusatzschaltelements 32a über der Achse 60a. Die Kurve 64a zeigt ein Schalten von dem geöffneten Zustand zu dem geschlossenen Zustand des Zusatzschaltelements 32a.

Eine Kurve 66a zeigt eine geladene Spannung an dem Filterkondensator 24a über der Achse 60a.

Eine Kurve 68a beschreibt einen Schaltzustand des Hauptversorgungsschalters 12a über der Achse 60a. Die Kurve 68a zeigt ein Schalten von dem geöffneten Zustand zu dem geschlossenen Zustand des Hauptversorgungsschalters 12a.

Eine Kurve 70a zeigt eine geladene Spannung an dem Buskondensator 18a über der Achse 60a.

Eine Kurve 72a zeigt eine Stromstärke an dem Buskondensator 18a über der Achse 60a.

Eine Kurve 74a zeigt eine Stromstärke an dem Filterkondensator 24a über der Achse 60a.

Eine Kurve 76a zeigt eine Stromstärke an dem Hauptversorgungsschalter 12a über der Achse 60a.

Eine Kurve 78a zeigt eine Stromstärke an dem Zusatzschaltelement 32a, über der Achse 60a.

Die Steuereinheit 22a ist zu der Steuerung des Hauptversorgungsschalters 12a in Abhängigkeit von einem Öffnungszustand des Zusatzschaltelements 32a vorgesehen. Die Steuereinheit 22a ist dazu vorgesehen, den Hauptversorgungsschalter 12a zeitlich nach dem Zusatzschaltelement 32a zu schließen.

Die Steuereinheit 22a ist dazu vorgesehen, den Hauptversorgungsschalter 12a und das Zusatzschaltelement 32a für unterschiedliche Polaritäten der Hauptspannung innerhalb einer Periodendauer der Hauptspannung zu schließen.

Die Steuereinheit 22a ist vorliegend dazu vorgesehen, das Zusatzschaltelement 32a bei einer negativen Polarität der Hauptspannung zu schließen. Das unidirektionale elektrische Bauelement 28a der Einschaltstrombegrenzungseinheit 16a ist dazu vorgesehen, einen Fluss des Hauptstroms bei der negativen Polarität der Hauptspannung zu sperren.

Der Einschaltstrom ist durch das Schließen des Zusatzschaltelements 32a innerhalb eines gesamten Zeitfensters zwischen zwei benachbarten Nulldurchgängen einer Hauptspannung begrenzbar. Die zwei benachbarten Nulldurchgänge sind jeweils an den Zeitpunkten A und B angeordnet. Der Einschaltstrom, insbesondere bei Schließen des Zusatzschaltelements 32a, ist durch das Schließen des Zusatzschaltelements 32a innerhalb des gesamten Zeitfensters für die negative Polarität der Hauptspannung, insbesondere zwischen den zwei Nulldurchgängen, begrenzbar. Das Aufladen beginnt ab dem Nulldurchgang, insbesondere zu dem Zeitpunkt B, nach dem Schließen des Zusatzschaltelements 32a.

Das Aufladen des Filterkondensators 24a ist anhand der Kurve 66a der Spannung des Filterkondensators 24a und anhand der Kurve 74a der Stromstärke in dem Filterkondensator 24a, welche jeweils einen Wert ungleich Null annehmen ab dem Nulldurchgang, insbesondere zu dem Zeitpunkt B, nach dem Schließen des Zusatzschaltelements 32a, erkennbar.

Das Aufladen des Buskondensators 18a ist anhand der Kurve 70a der Spannung des Buskondensators 18a und anhand der Kurve 72a des Stroms in dem Buskondensator 18a, welche jeweils einen Wert ungleich Null annehmen ab dem Nulldurchgang, insbesondere zu dem Zeitpunkt B, nach dem Schließen des Zusatzschaltelements 32a, erkennbar.

Das Zusatzschaltelement 32a ist zur Begrenzung des Einschaltstroms zu einem jeglichen Zeitpunkt innerhalb des Zeitfensters zwischen den zwei benachbarten Nulldurchgängen, insbesondere bei der negativen Polarität, der Hauptspannung schließbar.

Die Steuereinheit 22a ist vorliegend dazu vorgesehen, den Hauptversorgungsschalter 12a bei einer positiven Polarität der Hauptspannung zu schließen. Das unidirektionale elektrische Bauelement 28a der Einschaltstrombegrenzungseinheit 16a ist dazu vorgesehen, den Fluss des Hauptstroms bei der positiven Polarität der Hauptspannung freizugegeben.

Der Einschaltstrom ist durch ein Schließen des Hauptversorgungsschalters 12a innerhalb eines gesamten Zeitfensters zwischen einem Nulldurchgang und einer nächstfolgenden Extremstelle einer Hauptspannung begrenzbar. Der Nulldurchgang ist hierbei der oben genannte, nach dem Schließen des Zusatzschaltelements 32a nächstfolgende Nulldurchgang, insbesondere an dem Zeitpunkt B. Die Extremstelle ist an einem Zeitpunkt C angeordnet. Die Extremstelle ist vorliegend als ein Maximum der Hauptspannung bei der positiven Polarität ausgebildet.

Die Spannung des Filterkondensators 24a, insbesondere dargestellt in Kurve 66a, entspricht zumindest im Wesentlichen, insbesondere abgesehen von einem vernachlässigbaren Durchlasswiderstand des unidirektionalen elektrischen Bauelements 28a der Einschaltstrombegrenzungseinheit 16a, der Hauptspannung nach dem nach dem Schließen des Zusatzschaltelements 32a nächstfolgenden Nulldurchgang.

Der Hauptversorgungsschalter 12a ist zur Begrenzung des Einschaltstroms zu einem jeglichen Zeitpunkt innerhalb des Zeitfensters zwischen dem, insbesondere nach dem Schließen des Zusatzschaltelements 32a nächstfolgenden, Nulldurchgang und der Extremstelle, insbesondere bei der positiven Polarität, der Hauptspannung schließbar.

Der Hauptversorgungsschalter 12a ist zur Begrenzung des Einschaltstroms für eine Hauptspannung mit einer Frequenz von 50 Hz beispielsweise in dem Zeitfenster mit einer Länge von 5 ms und für eine Hauptspannung mit einer Frequenz von 60 Hz beispielsweise in dem Zeitfenster mit einer Länge von 4,33 ms schließbar.

Das unidirektionale elektrische Bauelement 28a der Einschaltstrombegrenzungseinheit 16a ist zu einer Sperrung des Flusses des Hauptstroms bei der negativen Polarität der Hauptspannung vorgesehen. Das unidirektionale elektrische Bauelement 28a der Einschaltstrombegrenzungseinheit 16a ist zu einer Sperrung eines Pfades (nicht dargestellt) durch den Filterkondensator 24a bei der negativen Polarität vorgesehen. Das unidirektionale elektrische Bauelement 28a der Einschaltstrombegrenzungseinheit 16a ist zu einer Sperrung eines Kurzschlusspfades (nicht dargestellt) durch das unidirektionale elektrische Bauelement 30a der Busentladungseinheit 26a bei der negativen Polarität vorgesehen. Das unidirektionale elektrische Bauelement 28a der Busentladungseinheit 26a ist zu einem Sperren eines Aufladepfads (nicht dargestellt) durch das unidirektionale elektrische Bauelement 28a der Busentladungseinheit 26a, insbesondere außerhalb des Zusatzschaltelements 32a, vorgesehen.

Alternativ kann die Steuereinheit 22a dazu vorgesehen sein, das Zusatzschaltelement 32a bei einer positiven Polarität und den Hauptversorgungsschalter 12a bei einer negativen Polarität der Hauptspannung zu schließen. Das unidirektionale elektrische Bauelement 28a der Einschaltstrombegrenzungseinheit 16a ist in einer derartigen Ausgestaltung dazu vorgesehen, den Fluss des Hauptstroms bei der positiven Polarität der Hauptspannung zu sperren und bei der negativen Polarität der Hauptspannung freizugeben.

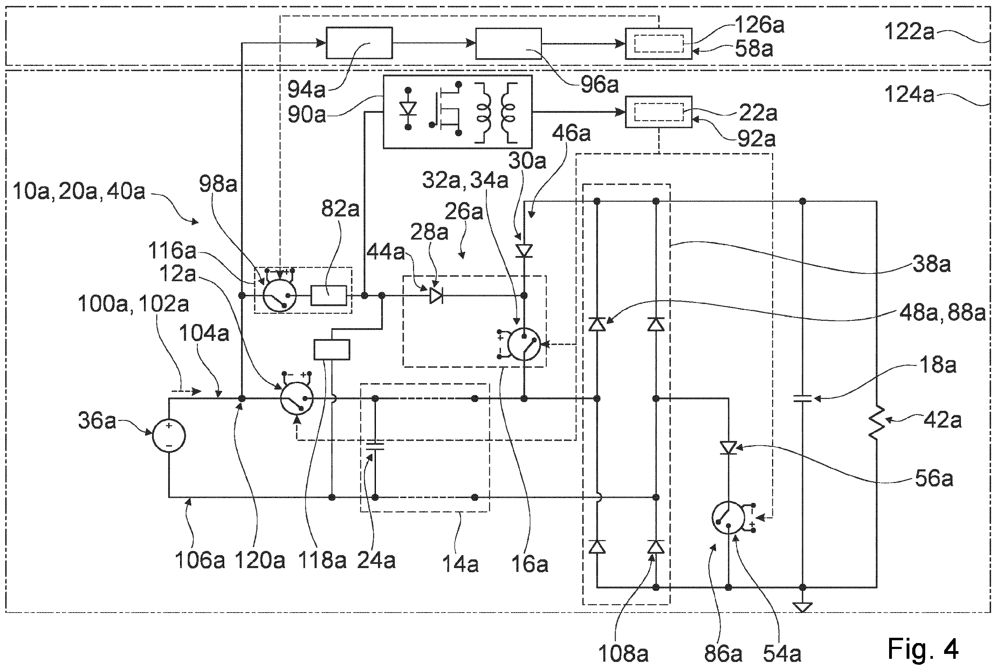

Figur 4 zeigt den Schaltplan der Haushaltsgerätevorrichtung 10a mit einer Unterteilung in Module 122a, 124a auf.

Die Haushaltsgerätevorrichtung 10a weist zumindest eine Stromversorgungseinheit 90a zumindest zu einer Versorgung der Steuereinheit 22a auf. Die Steuereinheit 22a ist der Stromversorgungseinheit 90a nachgeschaltet.

Die Haushaltsgerätevorrichtung 10a weist eine weitere Filtereinheit 82a auf, welche dazu vorgesehen ist, zumindest einen Teil des Hauptversorgungssignals, nämlich des Hauptstroms und/oder der Hauptspannung, zu einer Versorgung der Einschaltstrombegrenzungseinheit 16a und der Stromversorgungseinheit 90a zu filtern. Die weitere Filtereinheit 82a ist als eine PSU-Filtereinheit ausgebildet.

Die Stromversorgungseinheit 90a ist dazu vorgesehen, zumindest den durch die weitere Filtereinheit 82a gefilterten zumindest Teil des Hauptversorgungssignals zur Versorgung der Steuereinheit 22a umzuwandeln. Die Stromversorgungseinheit 90a ist der weiteren Filtereinheit 82a nachgeschaltet. Die Stromversorgungseinheit 90a ist der weiteren Filtereinheit 82a und der Steuereinheit 22a zwischengeschaltet.

Die weitere Filtereinheit 82a ist seriell zu der Einschaltstrombegrenzungseinheit 16a, insbesondere zu dem Zusatzschaltelement 32a, geschaltet. Die weitere Filtereinheit 82a ist seriell zu der Stromversorgungseinheit 90a geschaltet. Die Stromversorgungseinheit 90a ist parallel zu der Einschaltstrombegrenzungseinheit 16a geschaltet.

Die weitere Filtereinheit 82a ist dazu vorgesehen, das Hauptversorgungssignal zu einer Versorgung zumindest einer Elektronikplatinenschaltung 92a zu filtern. Die Elektronikplatinenschaltung 92a weist die Steuereinheit 22a auf.

Die weitere Filtereinheit 82a ist dazu vorgesehen, den zumindest Teil des Hauptversorgungssignals frei einer Versorgung einer Bedienerschnittstelle 58a zu filtern. Die Haushaltsgerätevorrichtung 10a weist eine zusätzliche weitere Filtereinheit 94a, insbesondere eine weitere PSU-Filtereinheit, zu einer Filterung zumindest eines Teils des Hauptversorgungssignals, insbesondere der Hauptspannung und/oder des Hauptstroms, auf. Die Haushaltsgerätevorrichtung 10a weist eine der zusätzlichen weiteren Filtereinheit 94a nachgeschaltete weitere Stromversorgungseinheit 96a zur Versorgung der Bedienerschnittstelle 58a auf. Die zusätzliche weitere Filtereinheit 94a ist der Hauptversorgungseinheit 36a, insbesondere unmittelbar, nachgeschaltet.

Die Bedienerschnittstelle 58a ist parallel zu dem Hauptversorgungsschalter 12a geschaltet. Die zusätzliche weitere Filtereinheit 94a und die weitere Stromversorgungseinheit 96a sind parallel zu dem Hauptversorgungsschalter 12a geschaltet. Die Bedienerschnittstelle 58a ist permanent elektrisch leitend mit der Hauptversorgungseinheit 36a verbunden.

Die Bedienerschnittstelle 58a ist parallel zu der Einschaltstrombegrenzungseinheit 16a geschaltet. Die zusätzliche weitere Filtereinheit 94a und die weitere Stromversorgungseinheit 96a sind parallel zu der Einschaltstrombegrenzungseinheit 16a geschaltet. Die Bedienerschnittstelle 58a ist parallel zu der Stromversorgungseinheit 90a geschaltet. Die zusätzliche weitere Filtereinheit 94a und die weitere Stromversorgungseinheit 96a sind parallel zu der Stromversorgungseinheit 90a geschaltet.

Die Haushaltsgerätevorrichtung 10a weist ein Bedienerschnittstellenmodul 122a auf, welches die zusätzliche weitere Filtereinheit 94a, die weitere Stromversorgungseinheit 96a und die Bedienerschnittstelle 58a umfasst. Die Haushaltsgerätevorrichtung 10a weist ein Leistungsmodul 124a auf, welches eine gesamte Schaltung der Haushaltsgerätevorrichtung 10a ausgenommen des Bedienerschnittstellenmoduls 122a aufweist.

Die weitere Filtereinheit 82a kann zumindest eine, beispielhaft genau eine, Filterspule (nicht dargestellt) aufweisen und/oder als diese ausgebildet sein. Alternativ oder zusätzlich kann die weitere Filtereinheit 82a jegliches andere, dem Fachmann als sinnvoll erscheinende Filterelement aufweisen.

Die weitere Filtereinheit 82a ist an einen Verbindungspunkt 120a zwischen der Hauptversorgungseinheit 36a und dem Hauptversorgungsschalter 12a angeschlossen. Die weitere Filtereinheit 82a ist dem Hauptversorgungsschalter 12a parallelgeschaltet. Die weitere Filtereinheit 82a ist unabhängig von einer Schaltstellung des Hauptversorgungsschalters 12a mit der Hauptversorgungseinheit 36a verbindbar.

Die Stromversorgungseinheit 90a und die Steuereinheit 22a sind dem Hauptversorgungsschalter 12a jeweils parallelgeschaltet. Die Stromversorgungseinheit 90a und die Steuereinheit 22a sind unabhängig von der Schaltstellung des Hauptversorgungsschalters 12a mit der Hauptversorgungseinheit 36a verbindbar.

Die Haushaltsgerätevorrichtung 10a weist einen Stand-By Schalter 98a auf, welcher dazu vorgesehen ist, die Stromversorgungseinheit 90a und die Einschaltstrombegrenzungseinheit 16a in einem Stand-By Modus von der Hauptversorgungseinheit 36a zu trennen. Der Stand-By Schalter 98a ist der Stromversorgungseinheit 90a und der Hauptversorgungseinheit 36a zwischengeschaltet. Der Stand-By Schalter 98a ist der Einschaltstrombegrenzungseinheit 16a und der Hauptversorgungseinheit 36a zwischengeschaltet.

Der Stand-By Schalter 98a ist der weiteren Filtereinheit 82a und der Hauptversorgungseinheit 36a zwischengeschaltet. Der Stand-By Schalter 98a ist der weiteren Filtereinheit 82 unmittelbar vorgeschaltet. Die weitere Filtereinheit 82a ist mittels des Stand-By Schalters 98a, insbesondere elektrisch, von der Hauptversorgungseinheit 36a trennbar.

Der Stand-By Schalter 98a und die weiteren Filtereinheit 82a sind seriell zueinander verschaltet. Der Stand-By Schalter 98a und die Stromversorgungseinheit 90a sind seriell zueinander verschaltet. Der Stand-By Schalter 98a und die Einschaltstrombegrenzungseinheit 16a sind seriell zueinander verschaltet.

Die Bedienerschnittstelle 58a weist eine Bedienersteuereinheit 126a auf, welche zu einer Steuerung des Stand-By Schalters 98a vorgesehen ist. Der Stand-By Schalter 98a ist zu einer, insbesondere von der Schaltstellung des Hauptversorgungsschalters 12a unabhängigen, Aktivierung oder Deaktivierung der Stromversorgungseinheit 90a, insbesondere in Abhängigkeit von einer Bedienereingabe an der Bedienerschnittstelle 58a, vorgesehen.

Der Stand-By Schalter 98a ist an den Verbindungspunkt 120a zwischen der Hauptversorgungseinheit 36a und dem Hauptversorgungsschalter 12a angeschlossen. Der Stand-By Schalter 98a ist dem Hauptversorgungsschalter 12a parallelgeschaltet.

Der Stand-By Schalter 98a ist unabhängig von einer Schaltstellung des Hauptversorgungsschalters 12a mit der Hauptversorgungseinheit 36a verbunden. Der Stand-By Schalter 98a ist der Hauptversorgungseinheit 36a, insbesondere zumindest entlang der Referenzstromrichtung 100a, unmittelbar nachgeschaltet.

Das Leistungsmodul 124a ist mittels des Stand By-Schalters 98a und des Hauptversorgungsschalters 12a elektrisch vollständig von der Hauptversorgungseinheit 36a separierbar.

Die Haushaltsgerätevorrichtung 10a weist zumindest eine Hauptspannungs-Ermittlungseinheit 118a auf. Die Hauptspannungs-Ermittlungseinheit 118a ist dazu vorgesehen, den zumindest einen Parameter der Hauptspannung zu ermitteln. Die Hauptspannungs-Ermittlungseinheit 118a ist zumindest dazu vorgesehen, die Polarität der Hauptspannung zu ermitteln. Die Hauptspannungs-Ermittlungseinheit 118a ist dazu vorgesehen, ein Ermittlungsergebnis basierend auf dem zumindest einen Parameter an die Steuereinheit 22a zu übermitteln.

Die Haushaltsgerätevorrichtung 10a weist eine Vorschalteinheit 116a auf, welche die weitere Filtereinheit 82a aufweist. Die Vorschalteinheit 116a ist vorliegend aus der weiteren Filtereinheit 82a und dem Stand-By Schalter 98a ausgebildet. Die Vorschalteinheit 116a ist dem Hauptversorgungsschalter 12a parallelgeschaltet. Die Vorschalteinheit 116a ist zwischen der Hauptversorgungseinheit 36a und der Stromversorgungseinheit 90a angeschlossen. Die Vorschalteinheit 116a ist zwischen der Hauptversorgungseinheit 36a und der Einschaltstrombegrenzungseinheit 16a angeschlossen.

Die Vorschalteinheit 116a ist zu einer, insbesondere gesteuert aussetzbaren, Energieversorgung und zu einem Schutz der Stromversorgungseinheit 90a und der Einschaltstrombegrenzungseinheit 16a, insbesondere des Zusatzschaltelements 32a, insbesondere gegenüber Abnormalitäten der Hauptspannung und/oder des Hauptstroms, vorgesehen.

Die Hauptspannungs-Ermittlungseinheit 118a ist der Vorschalteinheit 116a, insbesondere zumindest entlang der Referenzstromrichtung 100a, zumindest teilweise nachgeschaltet. Die Hauptspannungs-Ermittlungseinheit 118a ist der Vorschalteinheit 116a vorliegend vollständig nachgeschaltet. Die Hauptspannungs-Ermittlungseinheit 118a ist der weiteren Filtereinheit 82a und dem Stand-By Schalter 98a nachgeschaltet.

Der Stand-By Schalter 98a ist dazu vorgesehen, die Hauptspannungs-Ermittlungseinheit 118a in dem Stand-By Modus von der Hauptversorgungseinheit 36a zu trennen.

Die weitere Filtereinheit 82a ist dazu vorgesehen, der Hauptspannungs-Ermittlungseinheit 118a eine gefilterte Hauptspannung bereitzustellen.

Alternativ ist denkbar, dass die Hauptspannungs-Ermittlungseinheit 118a der Vorschalteinheit 116a lediglich teilweise nachgeschaltet ist. Die Hauptspannungs-Ermittlungseinheit 118a kann zwischen der weiteren Filtereinheit 82a und dem Stand-By Schaltelement 98a angeschlossen sein. Die Hauptspannungs-Ermittlungseinheit 118a kann der weiteren Filtereinheit 82a vorgeschaltet und dem Stand-By Schaltelement 98a nachgeschaltet sein.

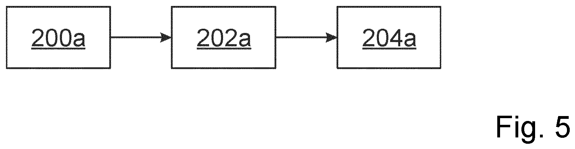

Figur 5 zeigt ein Ablaufdiagramm eines Verfahrens zu einem Betrieb der Haushaltsgerätevorrichtung 10a, wobei die zumindest eine Stromversorgungseinheit 90a in zumindest einem Betriebszustand zumindest die Steuereinheit 22a versorgt, wobei die zu dem Hauptversorgungsschalter 12a parallel geschaltete Einschaltstrombegrenzungseinheit 16a einen Einschaltstrom zumindest an dem Buskondensator 18a und/oder an dem Filterkondensator 24a begrenzt, und wobei die weitere Filtereinheit 82a zumindest in dem Betriebszustand zumindest den Teil des Hauptversorgungssignals zu der Versorgung der Einschaltstrombegrenzungseinheit 16a und der Stromversorgungseinheit 90a filtert.

Das Verfahren weist vorliegend einen Stand-By Schalter-Schließschritt 200a, auf. Der Stand-By Schalter 98a wird in dem Stand-By Schalter-Schließschritt 200a mittels der Bedienerschnittstelle 58a geschlossen. Die Haushaltsgerätevorrichtung 10a wird in dem Stand-By Schalter-Schließschritt 200a von dem Stand-By Modus in einen aktiven Betriebszustand transferiert.

Das Verfahren weist einen Ermittlungsschritt 202a auf, in welchem der zumindest eine Parameter der Hauptspannung ermittelt wird. Das auf dem zumindest einen Parameter basierende Ermittlungsergebnis wird in dem Ermittlungsschritt 202a an die Steuereinheit 22a übermittelt.

Das Verfahren weist einen Hauptversorgungsschalter-Schließschritt 204a auf, in welchem der Hauptversorgungsschalter 12a, insbesondere gemäß der Schaltcharakteristik in Figur 3, geschlossen wird, wobei die Einschaltstrombegrenzungseinheit 16a den Einschaltstrom begrenzt. In dem Hauptversorgungsschalter-Schließschritt 204a werden zumindest der Buskondensator 18a und der Filterkondensator 24a vor dem Schließen des Hauptversorgungsschalters 12a mittels der Einschaltstrombegrenzungseinheit 16a aufgeladen. Das Zusatzschaltelement 32a und der Hauptversorgungsschalter 12a werden in dem Hauptversorgungsschalter-Schließschritt 204a in Abhängigkeit von der ermittelten Polarität der Hauptspannung gesteuert.

Von mehrfach vorhandenen Objekten ist in den Figuren jeweils lediglich eines mit einem Bezugszeichen versehen.

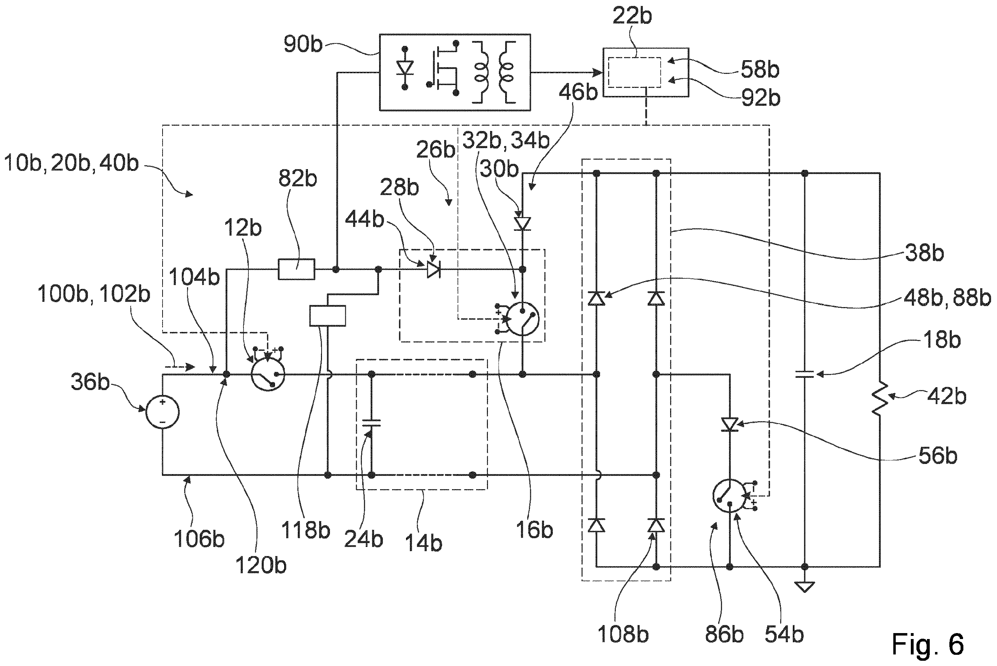

In Figur 6 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 5 verwiesen werden kann. Zur Unterscheidung der Ausführungsbeispiele ist der Buchstabe a in den Bezugszeichen des Ausführungsbeispiels in den Figuren 1 bis 5 durch den Buchstaben b in den Bezugszeichen des Ausführungsbeispiels der Figur 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 5 verwiesen werden.

Figur 6 zeigt eine alternative Ausgestaltung einer Haushaltsgerätevorrichtung 10b. Die Haushaltsgerätevorrichtung 10b weist eine weitere Filtereinheit 82b auf, wobei eine Einschaltstrombegrenzungseinheit 16b und eine Stromversorgungseinheit 90b der weiteren Filtereinheit 82b, insbesondere zumindest entlang einer Referenzstromrichtung 100b, nachgeschaltet sind.

Die weitere Filtereinheit 82b ist permanent, insbesondere unabhängig von einem Betriebszustand, elektrisch leitend mit einer Hauptversorgungseinheit 36b verbunden. Die weitere Filtereinheit 82b ist der Hauptversorgungseinheit 36b unmittelbar nachgeschaltet. Die Haushaltsgerätevorrichtung 10b ist frei eines Stand-By Schalters 98b ausgebildet.

Die weitere Filtereinheit 82b ist dazu vorgesehen, zumindest einen Teil des Hauptversorgungssignals, insbesondere eines Hauptstroms und/oder einer Hauptspannung, für jeden Zustand eines Hauptversorgungsschalters 12b und eines Zusatzschaltelements 32b zu filtern. Die weitere Filtereinheit 82b ist dazu vorgesehen, einen Einschaltstrom und/oder Überspannungsspitzen zumindest an dem Zusatzschaltelement 32b und an der Stromversorgungseinheit 90b zu begrenzen.

Die weitere Filtereinheit 82b ist vorliegend zu einem Filtern zumindest des Teils des Hauptversorgungssignals, insbesondere der Hauptspannung und/oder des Hauptstroms, zu einer Versorgung einer Bedienerschnittstelle 58b vorgesehen. Die Bedienerschnittstelle 58b und die Steuereinheit 22b sind der weiteren Filtereinheit 82b, insbesondere entlang der Referenzstromrichtung 100b, nachgeschaltet. Die Stromversorgungseinheit 90b ist zu einer Umwandlung des Hauptversorgungssignals, insbesondere der Hauptspannung und/oder des Hauptstroms, zu einer Versorgung der Bedienerschnittstelle 58b und der Steuereinheit 22b vorgesehen.

Das Bedienerschnittstellenmodul 122a und das Leistungsmodul 124a sind vorliegend ineinander integriert ausgebildet.

### Bezugszeichen

- 10: Haushaltsgerätevorrichtung
- 12: Hauptversorgungsschalter
- 14: Filtereinheit
- 16: Einschaltstrombegrenzungseinheit
- 18: Buskondensator
- 20: Induktionskochfeldvorrichtung
- 22: Steuereinheit
- 24: Filterkondensator
- 26: Busentladungseinheit
- 28: unidirektionales elektrisches Bauelement
- 30: unidirektionales elektrisches Bauelement
- 32: Zusatzschaltelement
- 34: Halbleiterschaltelement
- 36: Hauptversorgungseinheit
- 38: Gleichrichter
- 40: Schaltung
- 42: Ersatzwiderstandselement
- 44: Zusatzschalter
- 46: Zusatzschalter
- 48: Gleichrichtelement
- 50: Haushaltsgerät
- 52: Induktionskochfeld
- 54: zusätzliches Zusatzschaltelement
- 56: zusätzliches unidirektionales elektrisches Bauelement
- 58: Bedienerschnittstelle
- 60: Achse
- 62: Kurve
- 64: Kurve
- 66: Kurve
- 68: Kurve
- 70: Kurve
- 72: Kurve
- 74: Kurve
- 76: Kurve
- 78: Kurve
- 82: weitere Filtereinheit
- 86: zusätzlicher Zusatzschalter
- 88: Diode
- 90: Stromversorgungseinheit
- 92: Elektronikplatinenschaltung
- 94: zusätzliche weitere Filtereinheit
- 96: weitere Stromversorgungseinheit
- 98: Stand-By Schalter
- 100: Referenzstromrichtung
- 102: Aufladerichtung
- 104: Außenleiter
- 106: Neutralleiter
- 108: weiteres Gleichrichtelement
- 110: Aufstelleinheit
- 112: Filterkondensator-Aufladepfad
- 114: Buskondensator-Aufladepfad
- 116: Vorschalteinheit
- 118: Hauptspannungs-Ermittlungseinheit
- 120: Verbindungspunkt
- 122: Bedienerschnittstellenmodul
- 124: Leistungsmodul
- 126: Bedienersteuereinheit
- 200: Stand-By Schalter-Schließschritt
- 202: Ermittlungsschritt
- 204: Hauptversorgungsschalter-Schließschritt

## Patentansprüche

1. Haushaltsgerätevorrichtung (10a; 10b), insbesondere Induktionskochfeldvorrichtung (20a; 20b), mit einem Hauptversorgungsschalter (12a; 12b), mit zumindest einer Filtereinheit (14a; 14b), welche zumindest einen Filterkondensator (24a; 24b) aufweist, mit zumindest einem Buskondensator (18a; 18b), mit einer Steuereinheit (22a; 22b), mit zumindest einer Stromversorgungseinheit (90a; 90b) zumindest zu einer Versorgung der Steuereinheit (22a; 22b), mit einer zu dem Hauptversorgungsschalter (12a; 12b) parallel geschalteten Einschaltstrombegrenzungseinheit (16a; 16b) zu einer Begrenzung eines Einschaltstroms zumindest an dem Buskondensator (18a; 18b) und/oder an dem Filterkondensator (24a; 24b), und mit einer weiteren Filtereinheit (82a; 82b) welche dazu vorgesehen ist, zumindest einen Teil eines Hauptversorgungssignals zu einer Versorgung der Einschaltstrombegrenzungseinheit (16a; 16b) und der Stromversorgungseinheit (90a; 90b) zu filtern.

2. Haushaltsgerätevorrichtung (10a; 10b) nach Anspruch 1, **dadurch gekennzeichnet, dass** der Hauptversorgungsschalter (12a; 12b) einer Hauptversorgungseinheit (36a; 36b) und der Filtereinheit (14a; 14b) zwischengeschaltet ist.

3. Haushaltsgerätevorrichtung (10a; 10b) nach Anspruch 1 oder 2, **dadurch gekennzeichnet, dass** die weitere Filtereinheit (82a; 82b) an einem Verbindungspunkt (120a; 120b) zwischen einer Hauptversorgungseinheit (36a; 36b) und dem Hauptversorgungsschalter (12a; 12b) angeschlossen ist.

4. Haushaltsgerätevorrichtung (10a) nach einem der vorhergehenden Ansprüche, **gekennzeichnet durch** einen Stand-By Schalter (98a), welcher dazu vorgesehen ist, die Stromversorgungseinheit (90a) und die Einschaltstrombegrenzungseinheit (16a) in einem Stand-By Modus von einer Hauptversorgungseinheit (36a) zu trennen.

5. Haushaltsgerätevorrichtung (10a) nach Anspruch 4, **dadurch gekennzeichnet, dass** der Stand-By Schalter (98a) an einem Verbindungspunkt (120a) zwischen der Hauptversorgungseinheit (36a) und dem Hauptversorgungsschalter (12a) angeschlossen ist.

6. Haushaltsgerätevorrichtung (10b) nach einem der Ansprüche 1 bis 3, **dadurch gekennzeichnet, dass** die weitere Filtereinheit (82b) permanent elektrisch leitend mit einer Hauptversorgungseinheit (36b) verbunden ist.

7. Haushaltsgerätevorrichtung (10a; 10b) nach einem der vorhergehenden Ansprüche, **gekennzeichnet durch** zumindest eine Hauptspannungs-Ermittlungseinheit (118a; 118b).

8. Haushaltsgerätevorrichtung (10a; 10b) nach Anspruch 5, **gekennzeichnet durch** eine Vorschalteinheit (116a; 116b), welche die weitere Filtereinheit (82a; 82b) aufweist, wobei die Hauptspannungs-Ermittlungseinheit (118a; 118b) der Vorschalteinheit (116a; 116b) zumindest teilweise nachgeschaltet ist.

9. Haushaltsgerätevorrichtung (10a; 10b) nach einem der vorhergehenden Ansprüche, **gekennzeichnet durch** zumindest eine Busentladungseinheit (26a; 26b) zumindest zu einem Entladen des Buskondensators (18a; 18b), wobei die Einschaltstrombegrenzungseinheit (16a; 16b) und die Busentladungseinheit (26a; 26b) zumindest teilweise einstückig miteinander ausgebildet sind.

10. Haushaltsgerät (50a), insbesondere Induktionskochfeld (52a), mit einer Haushaltsgerätevorrichtung (10a 10b) nach einem der vorhergehenden Ansprüche.

11. Verfahren zu einem Betrieb einer Haushaltsgerätevorrichtung (10a; 10b) nach einem der Ansprüche 1 bis 9, wobei die zumindest eine Stromversorgungseinheit (90a; 90b) in zumindest einem Betriebszustand zumindest die Steuereinheit (22a; 22b) versorgt, wobei die zu dem Hauptversorgungsschalter (12a; 12b) parallel-geschaltete Einschaltstrombegrenzungseinheit (16a; 16b) einen Einschaltstrom zumindest an dem Buskondensator (18a; 18b) und/oder an dem Filterkondensator (24a; 24b) begrenzt, und wobei die weitere Filtereinheit (82a; 82b) zumindest in dem Betriebszustand zumindest den Teil des Hauptversorgungssignals zu der Versorgung der Einschaltstrombegrenzungseinheit (16a; 16b) und der Stromversorgungseinheit (90a; 90b) filtert.

## Claims

1. Household appliance apparatus (10a; 10b), in particular induction hob apparatus (20a; 20b), having a main supply switch (12a; 12b), having at least one filter unit (14a; 14b) which has at least one filter capacitor (24a; 24b), having at least one bus capacitor (18a; 18b), having a control unit (22a; 22b), having at least one power supply unit (90a; 90b) at least for supplying the control unit (22a; 22b), having an inrush current limiting unit (16a; 16b) which is connected in parallel with the main supply switch (12a; 12b) for limiting an inrush current at least at the bus capacitor (18a; 18b) and/or at the filter capacitor (24a; 24b), and having a further filter unit (82a; 82b) which is provided to filter at least a part of a main supply signal for supplying the inrush current limiting unit (16a; 16b) and the power supply unit (90a; 90b).

2. Household appliance apparatus (10a; 10b) according to claim 1, **characterized in that** the main supply switch (12a; 12b) is connected between a main supply unit (36a; 36b) and the filter unit (14a; 14b).

3. Household appliance apparatus (10a; 10b) according to claim 1 or 2, **characterized in that** the further filter unit (82a; 82b) is connected at a connection point (120a; 120b) between a main supply unit (36a; 36b) and the main supply switch (12a; 12b).

4. Household appliance apparatus (10a) according to one of the preceding claims, **characterized by** a standby switch (98a) which is provided to isolate the power supply unit (90a) and the inrush current limiting unit (16a) from a main supply unit (36a) in standby mode.

5. Household appliance apparatus (10a) according to claim 4, **characterized in that** the standby switch (98a) is connected at a connection point (120a) between the main supply unit (36a) and the main supply switch (12a).

6. Household appliance apparatus (10b) according to one of claims 1 to 3, **characterized in that** the further filter unit (82b) is permanently connected electrically conductively to a main supply unit (36b).

7. Household appliance apparatus (10a; 10b) according to one of the preceding claims, **characterized by** at least one main voltage determination unit (118a; 118b).

8. Household appliance apparatus (10a; 10b) according to claim 5, **characterized by** an upstream unit (116a; 116b) which has the further filter unit (82a; 82b), wherein the main voltage determination unit (118a; 118b) is at least partially connected downstream of the upstream unit (116a; 116b).

9. Household appliance apparatus (10a; 10b) according to one of the preceding claims, **characterized by** at least one bus discharge unit (26a; 26b) at least for discharging the bus capacitor (18a; 18b), wherein the inrush current limiting unit (16a; 16b) and the bus discharge unit (26a; 26b) are configured at least partially in one piece with one another.

10. Household appliance (50a), in particular induction hob (52a), comprising a household appliance apparatus (10a; 10b) according to one of the preceding claims.

11. Method for operating a household appliance apparatus (10a; 10b) according to one of claims 1 to 9, wherein the at least one power supply unit (90a; 90b) supplies at least the control unit (22a; 22b) in at least one operating state, wherein the inrush current limiting unit (16a; 16b) which is connected in parallel with the main supply switch (12a; 12b) limits an inrush current at least at the bus capacitor (18a; 18b) and/or at the filter capacitor (24a; 24b), and wherein the further filter unit (82a; 82b) filters at least the part of the main supply signal for supplying the inrush current limiting unit (16a; 16b) and the power supply unit (90a; 90b), at least in the operating state.

## Revendications

1. Dispositif pour appareil électroménager (10a, 10b), en particulier dispositif pour table de cuisson à induction (20a, 20b), comprenant un interrupteur d'alimentation principal (12a, 12b), au moins une unité de filtrage (14a, 14b) qui comprend au moins un condensateur de filtrage (24a, 24b), au moins un condensateur de bus (18a, 18b), une unité de commande (22a, 22b), au moins une unité d'alimentation (90a, 90b) destinée au moins à alimenter l'unité de commande (22a, 22b), une unité de limitation de courant d'appel (16a, 16b) connectée en parallèle avec l'interrupteur d'alimentation principal (12a, 12b) et destinée à limiter un courant d'appel au moins au niveau du condensateur de bus (18a, 18b) et/ou au niveau du condensateur de filtrage (24a, 24b), et une unité de filtrage supplémentaire (82a, 82b), qui est agencée pour filtrer au moins une partie d'un signal d'alimentation principal alimentant l'unité de limitation de courant d'appel (16a, 16b) et l'unité d'alimentation (90a, 90b).

2. Dispositif pour appareil électroménager (10a, 10b) selon la revendication 1, **caractérisé en ce que** l'interrupteur d'alimentation principal (12a, 12b) est intercalé entre une unité d'alimentation principale (36a, 36b) et l'unité de filtrage (14a, 14b).

3. Dispositif pour appareil électroménager (10a, 10b) selon la revendication 1 ou 2, **caractérisé en ce que** l'unité de filtrage supplémentaire (82a, 82b) est connectée à un point de connexion (120a, 120b) entre une unité d'alimentation principale (36a, 36b) et l'interrupteur d'alimentation principal (12a, 12b).

4. Dispositif pour appareil électroménager (10a) selon l'une des revendications précédentes, **caractérisé par** un interrupteur de veille (98a), qui est conçu pour isoler électriquement l'unité d'alimentation (90a) et l'unité de limitation du courant d'appel (16a) d'une unité d'alimentation principale (36a) dans un mode de veille.

5. Dispositif pour appareil électroménager (10a) selon la revendication 4, **caractérisé en ce que** l'interrupteur de veille (98a) est connecté à un point de connexion (120a) entre l'unité d'alimentation principale (36a) et l'interrupteur d'alimentation principal (12a).

6. Dispositif pour appareil électroménager (10b) selon l'une des revendications 1 à 3, **caractérisé en ce que** l'unité de filtrage supplémentaire (82b) est connectée en permanence, de manière électriquement conductrice, à une unité d'alimentation principale (36b).

7. Dispositif pour appareil électroménager (10a, 10b) selon l'une des revendications précédentes, **caractérisé par** au moins une unité de détermination de tension principale (118a, 118b).

8. Dispositif pour appareil électroménager (10a, 10b) selon la revendication 5, **caractérisé par** un étage d'entrée (116a, 116b), qui comprend l'unité de filtrage supplémentaire (82a, 82b), dans lequel l'unité de détermination de tension principale (118a, 118b) est connectée au moins en partie en aval de l'étage d'entrée (116a, 116b).

9. Dispositif pour appareil électroménager (10a, 10b) selon l'une des revendications précédentes, **caractérisé par** au moins une unité de décharge de bus (26a, 26b), destinée au moins à décharger le condensateur de bus (18a, 18b), dans lequel l'unité de limitation de courant d'appel (16a, 16b) et l'unité de décharge de bus (26a, 26b) sont formées au moins partiellement d'une seule pièce.

10. Appareil électroménager (50a), en particulier table de cuisson à induction (52a), comprenant un dispositif pour appareil électroménager (10a, 10b) selon l'une des revendications précédentes.

11. Procédé de fonctionnement d'un dispositif pour appareil électroménager (10a, 10b) selon l'une des revendications 1 à 9, dans lequel l'au moins une unité d'alimentation (90a, 90b) alimente au moins l'unité de commande (22a, 22b) dans au moins un état de fonctionnement, dans lequel l'unité de limitation de courant d'appel (16a, 16b) connectée en parallèle avec l'interrupteur d'alimentation principal (12a, 12b) limite un courant d'appel au moins au niveau du condensateur de bus (18a, 18b) et/ou au niveau du condensateur de filtrage (24a, 24b), et dans lequel l'unité de filtrage supplémentaire (82a, 82b) filtre, au moins dans l'état de fonctionnement, au moins la partie du signal d'alimentation principal alimentant l'unité de limitation de courant d'appel (16a, 16b) et l'unité d'alimentation (90a, 90b).
